# EUROPÄISCHE PATENTANMELDUNG

(11) **EP 2 062 922 A1**
(43) Veröffentlichungstag der Anmeldung: **27.05.2009**
(21) Anmeldenummer: 07022087.6
(22) Anmeldetag: 14.11.2007
(51) Int. Cl.: C08B 16/00, C08B 1/00, D01F 2/02

(54) **Verfahren zur Herstellung von regenerierten Biopolymeren und die danach erhältlichen regenerierten Erzeugnisse**

(71) Anmelder: BASF SE, 67056 Ludwigshafen (DE)
(72) Erfinder: Die Erfindernennung liegt noch nicht vor
(74) Vertreter: Hagemann, Heinrich

(57) **Zusammenfassung**

Beschrieben wird ein Verfahren zur Herstellung von regenerierten Biopolymeren in Form von Kohlenhydraten unter Verwendung eines die Biopolymere gelöst enthaltenden Lösungssystems, wobei das Lösungssystem auf einer geschmolzenen ionischen Flüssigkeit und gegebenenfalls einem protischen Lösungsmittel oder einem Gemisch hiervon beruht, die in dem Lösungssystem gelösten Biopolymere in einem Koagulationsmedium ausgefällt werden, wobei sich in dem Koagulationsmedium ein Koagulationsmittel oder ein Gemisch von Koagulationsmitteln befindet. Dieses Verfahren ist dadurch gekennzeichnet, dass die Oberflächenspannung σ des Koagulationsmittels oder des Gemisches der Koagulationsmittel 99% bis 30% der Oberflächenspannung σ von Wasser beträgt, wobei die jeweilige Oberflächenspannung gemäß ASTM D 1590-60 bei einer Temperatur von 50°C gemessen wurde. Dieses Verfahren ist wirtschaftlich und flexibel zu führen. Es führt zu vorteilhaften Verfahrenserzeugnissen, insbesondere in Form von Spinnfasern. Diese sind insbesondere nicht-fibrillierend und zeigen ein vorteilhaftes Verhältnis von Nass- zu Trockenfestigkeit.

## Beschreibung

Die Erfindung betrifft ein Verfahren zur Herstellung von regenerierten Biopolymeren in Form von Kohlenhydraten, insbesondere von Stärke, Cellulose und/oder von Derivaten von Stärke und Cellulose, unter Verwendung eines die Biopolymere gelöst enthaltenden Lösungssystems, wobei das Lösungssystem auf einer geschmolzenen ionischen Flüssigkeit und gegebenenfalls einem protischen Lösungsmittel oder einem Gemisch hiervon beruht, die in dem Lösungssystem gelösten Biopolymere in einem Koagulationsmedium ausgefällt werden, wobei sich in dem Koagulationsmedium ein Koagulationsmittel oder ein Gemisch von Koagulationsmitteln befindet. Ferner betrifft die Erfindung die danach erhältlichen regenerierten Biopolymeren in Form von Kohlenhydraten, insbesondere in Form von Spinnfasern mit einer Nassfibrillationsnote von weniger oder gleich 2, die insbesondere nicht-fibrillierend sind.

Cellulose ist mit einem Anteil von etwa 700 Milliarden Tonnen am geschätzten Biomassevorrat von 1,5 Billionen Tonnen auf der Erde der wichtigste Vertreter in der Gruppe der organischen Biopolymere. Aus Holz und Baumwolle gewonnener Zellstoff, der einen sehr hohen Anteil an Cellulose enthält, ist zur Zeit die wichtigste Rohstoffbasis für die Herstellung von Papier, Pappe, Celluloseregeneratfasern und -folien.

Zur Verarbeitung von Cellulose wurden in der Vergangenheit einige Lösungsmittelsysteme entwickelt. Von größter technischer Bedeutung ist heute nach wie vor das bereits seit langem bekannte Viskose-Verfahren. Darin wird Cellulose zunächst zum Xanthogenat derivatisiert und dann in verdünnter Natronlauge aufgelöst. Durch Regeneration in speziellen Koagulationsbädern wird die Derivatisierung rückgängig und Cellulose so verfügbar gemacht. Verfahrensbedingt entstehen allerdings große Mengen an Salzen und schwefelhaltigen Abgasen, welche mit Hilfe nachsorgender Technologien behandelt werden müssen.

Im Zuge des zunehmenden Umweltbewusstseins der letzten Jahrzehnte wurden Entwicklungen zur Direktlösung von Cellulose mit geringerem Zwangsanfall an Abfällen und unerwünschten Emissionen forciert. Hier hat das Verfahren mit dem Lösungsmittel N-Methylmorpholin-N-oxid-mono-Hydrat (NMMO) derzeit die wichtigste technische Bedeutung erlangt. Nachteilig ist hierbei das enge Lösungsfenster im ternären System NMMO, Wasser und Cellulose, der Einsatz eines oxidierend wirkenden Lösungsmittels sowie die systembedingte Fibrillierung der hergestellten Produkte.

Ionische Flüssigkeiten können als Ersatz für konventionelle organische Lösungsmittel dienen. Sie sind bei niedrigen Temperaturen (< 100°C) schmelzende organische Salze, die eine neuartige Klasse von Lösungsmitteln mit nicht-molekularem, ionischem Charakter darstellen. Ionische Flüssigkeiten ohne substantielle Verunreinigungen besitzen keinen messbaren Dampfdruck. Je nach Wahl des Kations und Anions kann ihre Polarität und damit ihre Eigenschaft als Lösungsmittel eingestellt werden.

Die US-A-1 943 176 lehrt die Nutzung organischer Salze der Substanzklassen der N-Alkyl- bzw. N-Arylsubstituierten Pyridiniumchloride in Mischung mit stickstoffhaltigen Basen (z.B. Pyridin) zur Lösung underivatisierter Cellulose. Diese Erfindung hat allerdings nie technisch Bedeutung erlangt. Die US-A-2 339 012 beschreibt die Lösung von Cellulose mit ähnlich substituierten Pyridiniumhydroxiden in Mischung mit Wasser oder Alkoholen. Auch hier scheint eine technische Realisierung an einer Reihe ungünstiger technischer Voraussetzungen zur direkten Lösung von Cellulose (z.B. hohe Drücke) gescheitert zu sein.

Durch den Einsatz einer neuen Klasse ionischer Flüssigkeiten konnten die oben genannten Nachteile überwunden werden. In einer neuen Entwicklung beschreibt die WO 2003/029329 die Verwendung ionischer Flüssigkeiten. Diese sind als flexible Lösungsmittel besonders für die direkte Lösung von Cellulose in Abwesenheit von Wasser und anderen stickstoffhaltigen organischen Basen geeignet. Nachteilig ist es, dass auf den Einsatz von Wasser bei der Lösungsherstellung verzichtet werden muss. Die Beimischung von mehr als 5 Gew.-% Wasser wird ausdrücklich ausgeschlossen. Da die ionischen Flüssigkeiten aus wirtschaftlichen sowie umwelttechnischen Überlegungen nahezu vollständig zurückgewonnen werden müssen und die Produktkonsolidierung vorwiegend im wässerigen Milieu erfolgt, stellt dies eine erhebliche Einschränkung dar, die bisher eine technische Umsetzung verhinderte. Gerade die destillative Abtrennung von Wassergehalten kleiner als 5 Gew.-% gestaltet sich als technisch schwierig, äußerst energieintensiv und damit als wirtschaftlich ineffizient.

Die oben beschriebenen Nachteile des Standes der Technik werden weitgehend durch den Erfindungskomplex gelöst, der sich aus der PCT/EP2006/012748 ergibt und dem eingangs geschilderten Stand der Technik entspricht. Dieses bekannte Verfahren ist wirtschaftlich und umweltfreundlich und ermöglicht eine vorteilhafte Regenerierung von Biopolymeren, insbesondere in Form von Stärke, von Cellulose sowie von Derivaten von Stärke und Cellulose. Mit diesem-bekannten technischen Vorschlag ist eine hohe Produktionsflexibilität mit einem breiten Bereich mechanischer Eigenschaften verbunden. Die danach erhaltenen Spinnfasern, insbesondere durch Nassverspinnen erhalten, sind "nicht-fibrillierend", anders als beispielsweise die nach dem NMMO-Verfahren hergestellten Lyocellfasern, die eine ausgeprägte fibrillare Struktur zeigen. Darüber hinaus weisen die aus der PCT/EP2006/012748 bekannten Spinnfasern keinen nachteiligen Gehalt an Schwefel auf, anders als die nach dem Viskose-Verfahren erhaltenen Spinnfasern, und schließen einen unerwünschten Gehalt an Kupfer aus. Das Wasserrückhaltevermögen und die Höchstzugkraft sind sehr zufriedenstellend. Es hat sich gezeigt, dass es von hohem Nutzen wäre, dieses bekannte Verfahren so weiterzubilden, dass die danach erhaltenen Spinnfasern eine zufriedenstellend hohe Höchstzugkraft (sowohl nass wie auch trocken) aufweisen.

Der vorliegenden Erfindung lag daher die Aufgabe zugrunde, das eingangs bezeichnete Verfahren so weiterzubilden, dass insbesondere eine Optimierung des Verhältnisses von Nass- und Trockenfestigkeiten bei den danach erhaltenen Spinnfasern erreicht wird.

Erfindungsgemäß wird diese Aufgabe dadurch gelöst, dass die Oberflächenspannung σ des Koagulationsmittels oder des Gemisches der Koagulationsmittel 99% bis 30% der Oberflächenspannung σ von Wasser beträgt, wobei die jeweilige Oberflächenspannung gemäß ASTM D 1590-60 bei einer Temperatur von 50°C gemessen wurde.

Bei der Ausübung der Erfindung hat es sich erwiesen, dass es bevorzugt ist, wenn die bezeichnete Oberflächenspannung des Koagulationsmittels oder des Gemisches des Koagulationsmittels 99% bis 35%, insbesondere 99% bis 40%, beträgt. Als besonders bevorzugt kann der Bereich von 95% bis 40% angegeben werden. Kern der Erfindung ist demzufolge die Auswahl eines Koagulationsmittels, das die oben bezeichneten Rahmenbedingungen zur Oberflächenspannung σ erfüllt. Bei deren Einhaltung wird die vorstehend formulierte Aufgabe in dem wünschenswerten Umfang gelöst. Wird der Höchstwert von 99% überschritten, dann führt dies dazu, dass sich die gewünschten Nassfestigkeitswerte nicht einstellen, auch nicht bei der Verstreckungsmaßnahme, die sich der Koagulation anschließen kann. Wird der Niedrigstwert von 40% unterschritten, dann führt dies dazu, dass in aller Regel Filamentbrüche auftreten und die Fasern nicht im gewünschten Eigenschaftsprofil erhalten werden.

Im Rahmen der Erfindung ist es in Einzelfällen zulässig und kann auch von Vorteil sein, dem Lösungssystem protische Lösungsmittel einzubeziehen. Die Menge wird der Fachmann derartig einstellen, dass die vorstehend formulierte Aufgabe noch in dem gewünschten Umfang gelöst wird.

Dem Fachmann ist der Begriff "protisches Lösungsmittel" verständlich. Protische Lösungsmittel enthalten gemäß C. Reichardt, "Solvents and Solvent Effects in Organic Chemistry", 3rd edition, S. 82 - 84, 2003, Wiley-VCH, Weinheim, Wasserstoffatome, welche an elektronegative Elemente gebunden sind. Typische Beispiele hierfür sind neben Wasser, Alkohole, Amine (unter Aminen sind aliphatische und cycloaliphatische Amine zu verstehen), Säureamide und Carbonsäuren. Dabei kann es sich insbesondere um niedere Alkohole handeln, wie insbesondere Methanol, Ethanol, 1-Propanol, 2-Propanol, 1-Butanol, 2-Butanol, 2-Methyl-1-propanol und/oder 2-Methyl-2-propanol, vorzugsweise Methanol, Ethanol, Propanol und/oder Butanol. Darüber hinaus zählen zu den besonders vorteilhaften protischen Lösungsmitteln Glykole, Amine, Säureamide und Carbonsäuren, vorzugsweise Glykole, wie Monoethylenglykol, Diethylenglykol, Mono-1,2-propylenglykol, Di-1,2-propylenglykol, 1,2-Butylenglykol, 2,3-Butylenglykol und/oder Glycerin, und Amine, wie Methylamin, Ethylamin, n-Propylamin, i-Propylamin, n-Butylamin, Dimethylamin, Diethylamin, Di-n-propylamin, Di-n-butylamin, Pyrrolidin, Piperidin, Piperazin, N-Methyl-piperazin, N-Ethylpiperazin, Morpholin, Ethylendiamin, 1,2-Propylendiamin, 1,3-Propylen-diamin, Di-(2-cyanoethyl)amin, Di-(2-aminoethyl) amin, Tri-(2-aminoethyl)amin, Ethanolamin, Diethanolamin, Triethanolamin, Propanolamin, Dipropanolamin und/oder Tripropanolamin. Die bezeichneten Alkohole sind als bevorzugt anzusehen. Die protischen Lösungsmittel können, was im Einzelfall von Vorteil sein kann, gemischt eingesetzt werden. Dies gilt insbesondere für die Zumischung von Wasser im Falle von Alkoholen.

Bezüglich der Wahl der ionischen Flüssigkeiten zur Verwirklichung der vorliegenden Erfindung unterliegt der Fachmann keinen wesentlichen Einschränkungen. Daher sollen für die Zwecke der Erfindung besonders geeignete ionische Flüssigkeiten wie folgt dargestellt werden:
Ionische Flüssigkeiten im Sinne der vorliegenden Erfindung sind vorzugsweise (A) Salze der allgemeinen Formel (I)

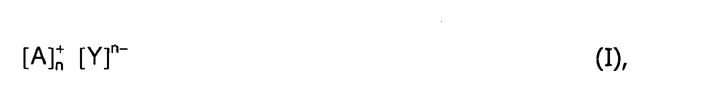

   in der n für 1, 2, 3 oder 4 steht, [A]⁺ für ein quartäres Ammonium-Kation, ein Oxonium-Kation, ein Sulfonium-Kation oder ein Phosphonium-Kation und [Y]ⁿ⁻ für ein ein-, zwei-, drei- oder vierwertiges Anion steht;
(B) gemischte Salze der allgemeinen Formeln (II) [A¹]⁺[^{A}2]⁺ [Y]ⁿ⁻ (IIa), wobei n = 2; [A¹]⁺[A²]+[A³]+ [Y]ⁿ⁻ (IIb), wobei n = 3; oder [A¹]⁺[A²]⁺[A³]⁺[A⁴]⁺ [Y]ⁿ⁻ (IIc), wobei n = 4 und
   wobei [A¹]⁺, [A²]⁺, [A³]⁺ und [A⁴]⁺ unabhängig voneinander aus den für [A]⁺ genannten Gruppen ausgewählt sind und [Y]ⁿ⁻ die unter (A) genannte Bedeutung besitzt.

Verbindungen, die sich zur Bildung des Kations [A]⁺ von ionischen Flüssigkeiten eignen, sind z.B. aus DE 102 02 838 A1 bekannt. So können solche Verbindungen Sauerstoff-, Phosphor-, Schwefel- oder insbesondere Stickstoffatome enthalten, beispielsweise mindestens ein Stickstoffatom, bevorzugt 1 bis 10 Stickstoffatome, besonders bevorzugt 1 bis 5, ganz besonders bevorzugt 1 bis 3 und insbesondere 1 bis 2 Stickstoffatome. Gegebenenfalls können auch weitere Heteroatome wie Sauerstoff-, Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen.

Für den Fall, dass das Stickstoffatom der Träger der positiven Ladung im Kation der ionischen Flüssigkeit ist, kann bei der Synthese der ionischen Flüssigkeiten zunächst durch Quaternisierung am Stickstoffatom etwa eines Amins oder Stickstoff-Heterocyclus' ein Kation erzeugt werden. Die Quaternisierung kann durch Alkylierung des Stickstoffatoms erfolgen. Je nach verwendetem Alkylierungsreagens werden Salze mit unterschiedlichen Anionen erhalten. In Fällen, in denen es nicht möglich ist, das gewünschte Anion bereits bei der Quaternisierung zu bilden, kann dies in einem weiteren Syntheseschritt erfolgen. Ausgehend beispielsweise von einem Ammoniumhalogenid kann das Halogenid mit einer Lewissäure umgesetzt werden, wobei aus Halogenid und Lewissäure ein komplexes Anion gebildet wird. Alternativ dazu ist der Austausch eines Halogenidions gegen das gewünschte Anion möglich. Dies kann durch Zugabe eines Metallsalzes unter Koagulation des gebildeten Metallhalogenids, über einen Ionenaustauscher oder durch Verdrängung des Halogenidions durch eine starke Säure (unter Freisetzung der Halogenwasserstoffsäure) geschehen. Geeignete Verfahren sind beispielsweise in Angew. Chem. 2000, 112, S. 3926 - 3945 und der darin zitierten Literatur beschrieben.

Geeignete Alkylreste, mit denen das Stickstoffatom in den Aminen oder Stickstoff-Heterocyclen beispielsweise quaternisiert sein kann, sind C₁-C₁₈-Alkyl, bevorzugt C₁-C₁₀-Alkyl, besonders bevorzugt C₁C₆-Alkyl und ganz besonders bevorzugt Methyl. Die Alkylgruppe kann unsubstituiert sein oder einen oder mehrere gleiche oder verschiedene Substituenten aufweisen.

Bevorzugt sind solche Verbindungen, die mindestens einen fünf- bis sechsgliedrigen Heterocyclus, insbesondere einen fünfgliedrigen Heterocyclus, enthalten, der mindestens ein Stickstoffatom sowie gegebenenfalls ein Sauerstoff- oder Schwefelatom aufweist. Ebenfalls insbesonders bevorzugt sind solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit zwei Stickstoffatomen. Weiterhin bevorzugt sind aromatische Heterocyclen.

Besonders bevorzugte Verbindungen sind solche, die ein Molgewicht unter 1000 g/mol aufweisen, ganz besonders bevorzugt unter 500 g/mol und insbesondere unter 300 g/mol.

Weiterhin sind solche Kationen bevorzugt, die ausgewählt sind aus den Verbindungen der Formeln (IIIa) bis (IIIw), 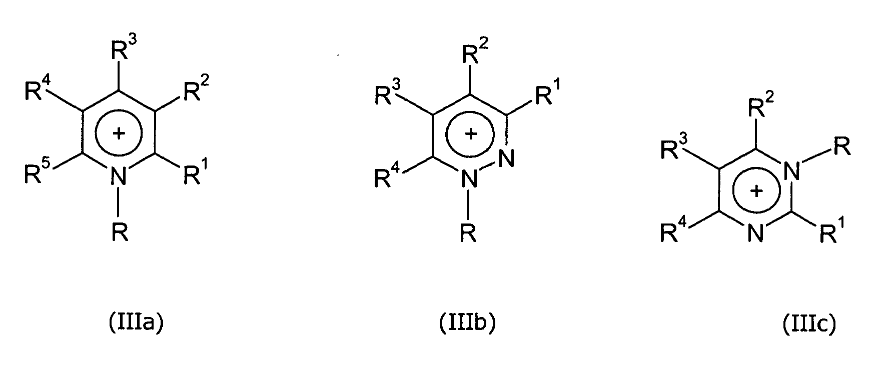 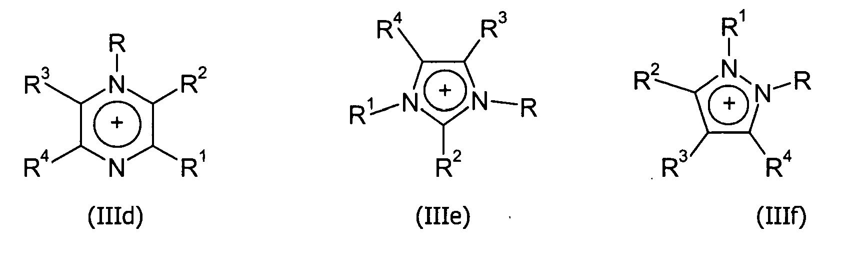 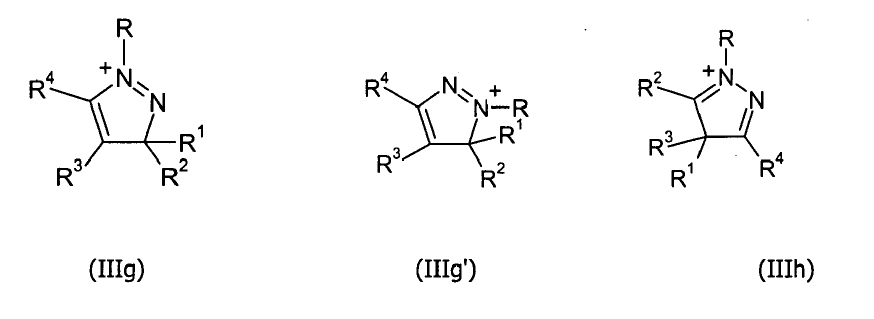 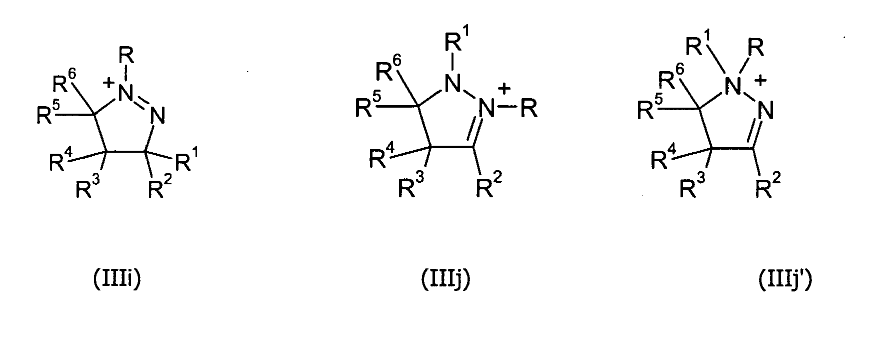 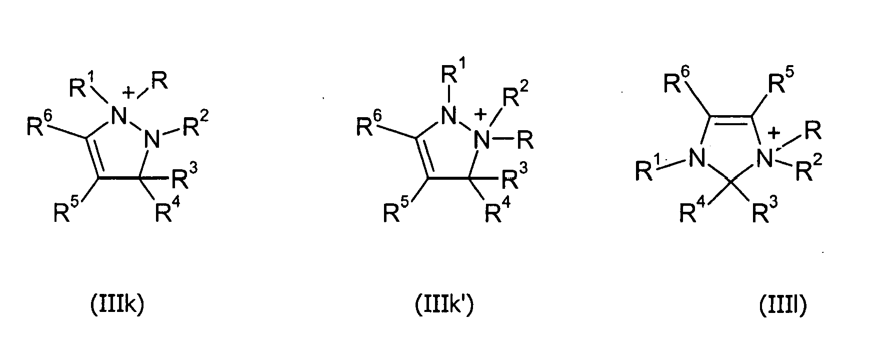 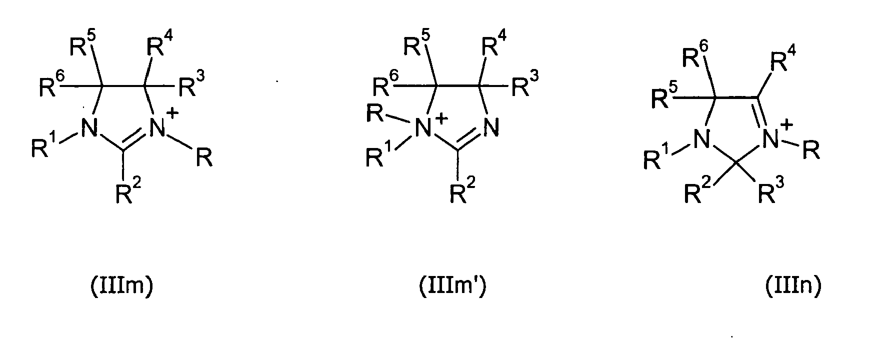 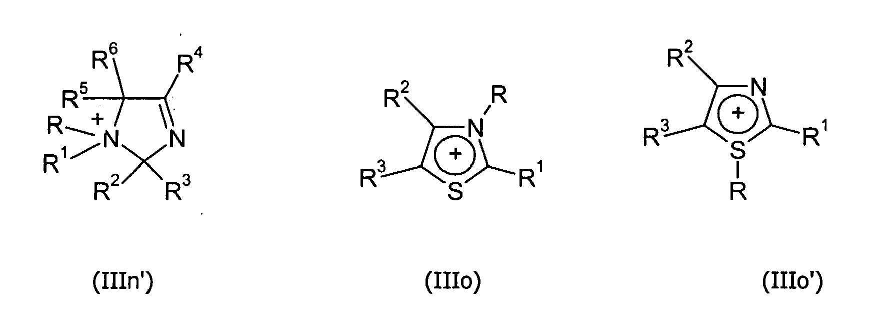 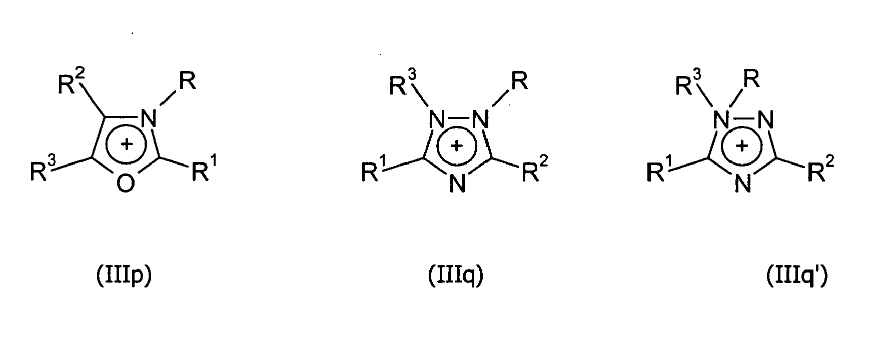 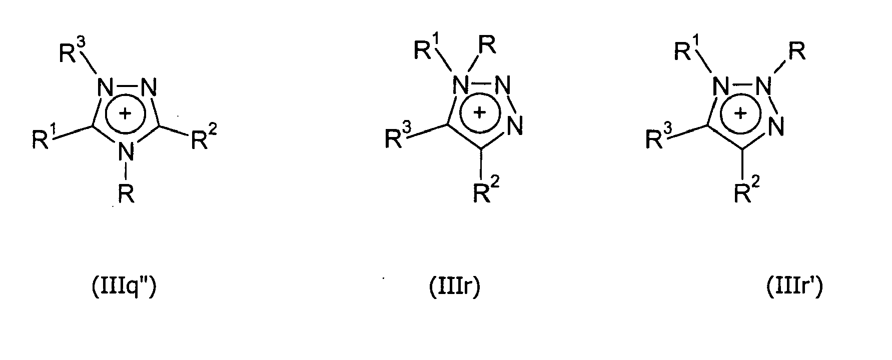 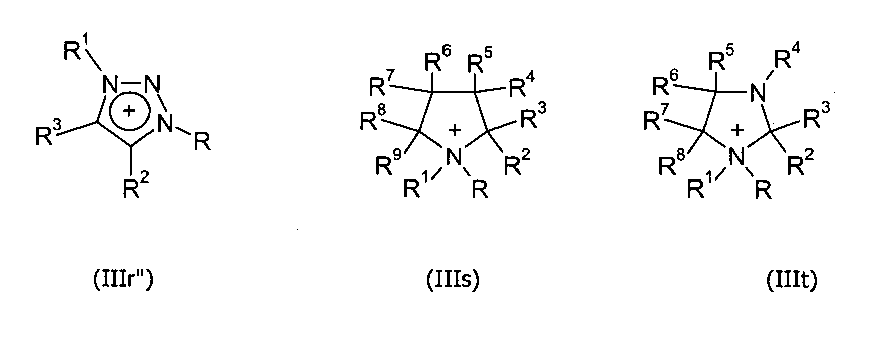 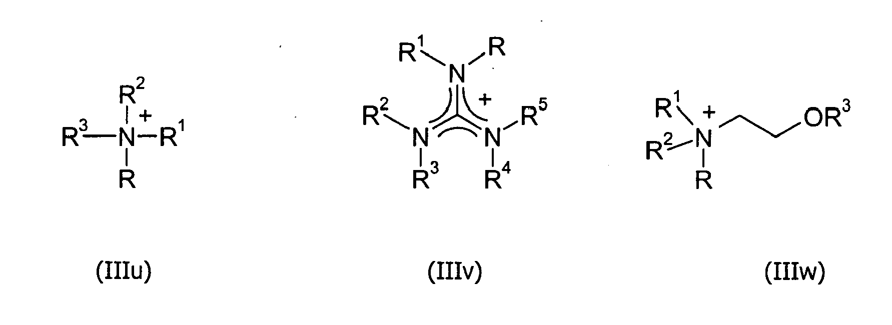 sowie Oligomere, die diese Strukturen enthalten. Weitere geeignete Kationen sind Verbindungen der allgemeinen Formel (IIIx) und (II-Iy) 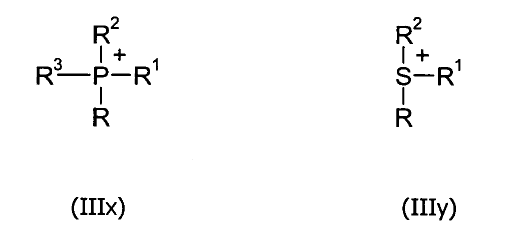 sowie Oligomere, die diese Struktur enthalten.

In den oben genannten Formeln (IIIa) bis (IIIy) stehen
- der Rest R für Wasserstoff, einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen; und
- die Reste R¹ bis R⁹ unabhängig voneinander für Wasserstoff, eine Sulfo-Gruppe oder einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen, wobei die Reste R¹ bis R⁹, welche in den oben genannten Formeln (III) an ein Kohlenstoffatom (und nicht an ein Heteroatom) gebunden sind, zusätzlich auch für Halogen oder eine funktionelle Gruppe stehen können; oder zwei benachbarte Reste aus der Reihe R¹ bis R⁹ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen.

Als Heteroatome kommen bei der Definition der Reste R und R¹ bis R⁹ prinzipiell alle Heteroatome in Frage, welche in der Lage sind, formell eine -CH₂-, eine -CH=, eine -C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt. Als bevorzugte Gruppen seien insbesondere -O-, -S-, -SO-, -SO₂-, -NR'-, -N=, -PR'-, - PR'₂ und -SiR'₂- genannt, wobei es sich bei den Resten R' um den verbleibenden Teil des Kohlenstoff enthaltenden Rests handelt. Die Reste R¹ bis R⁹ können dabei in den Fällen, in denen diese in den oben genannten Formeln (III) an ein Kohlenstoffatom (und nicht an ein Heteroatom) gebunden sind, auch direkt über das Heteroatom gebunden sein.

Als funktionelle Gruppen kommen prinzipiell alle funktionellen Gruppen in Frage, welche an ein Kohlenstoffatom oder ein Heteroatom gebunden sein können. Als geeignete Beispiele seien -OH (Hydroxy), =O (insbesondere als Carbonylgruppe), -NH₂ (Amino), - NHR, -NR₂, =NH (Imino), -COOH (Carboxy), -CONH₂ (Carboxamid), -SO₃H (Sulfo) und -CN (Cyano) genannt, insbesondere -OH (Hydroxy), =O (insbesondere als Carbonylgruppe), -NH₂ (Amino), =NH (Imino), -COOH (Carboxy), -CONH₂ (Carboxamid), -SO₃H (Sulfo) und -CN (Cyano). Funktionelle Gruppen und Heteroatome können auch direkt benachbart sein, so dass auch Kombinationen aus mehreren benachbarten Atomen, wie etwa -O- (Ether), -S- (Thioether), -COO- (Ester), -CONH- (sekundäres Amid) oder - CONR'- (tertiäres Amid), mit umfasst sind, beispielsweise Di-(C₁-C₄-Alkyl)-amino, C₁-C₄-Alkyloxycarbonyl oder C₁-C₄-Alkyloxy.

Als Halogene seien Fluor, Chlor, Brom und Iod genannt.

Bevorzugt steht der Rest R für
- unverzweigtes oder verzweigtes, unsubstituiertes oder ein bis mehrfach mit Hydroxy, Halogen, Phenyl, Cyano, C₁- C₆-Alkoxycarbonyl und/oder SO₃H substituiertes C₁-C₁₈-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl, 2-Methyl-2-propyl, 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, 2-Hydroxyethyl, Benzyl, 3-Phenylpropyl, 2-Cyanoethyl, 2-(Methoxycar-bonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl, Undecylfluorisopentyl, 6-Hydroxyhexyl und Propylsulfonsäure;
- Glykole, Butylenglykole und deren Oligomere mit 1 bis 100 Einheiten und einem Wasserstoff oder einem C₁-C₈-Alkyl als Endgruppe, wie beispielsweise R^{A}O-(CHR^{B}-CH₂-O)ₘ-CHR^{B}-CH₂- oder R^{A}O-(CH₂CH₂CH₂CH₂O)ₘ-CH₂CH₂CH₂CH₂O-mit R^{A} und R^{B} bevorzugt Wasserstoff, Methyl oder Ethyl und m bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
- Vinyl; und
- Allyl
- N,N-Di-C₁-C₆-alkyl-amino, wie beispielsweise N,N-Dimethylamino und N,N-Diethyl-amino. Besonders bevorzugt steht der Rest R für unverzweigtes und unsubstituiertes C₁-C₁₈-Alkyl, wie beispielsweise Methyl, Ethyl, Allyl, 1-Propyl, 1-Butyl, 1-Pentyl, 1-Hexyl, 1-Heptyl, 1-Octyl, 1-Decyl, 1-Dodecyl, 1-Tetradecyl, 1-Hexadecyl, 1-Octadecyl, insbesondere für Methyl, Ethyl, 1-Butyl und 1-Octyl sowie für CH₃O-(CH₂CH₂O)ₘ-CH₂CH₂- und CH₃CH₂O-(CH₂CH₂O)m-CH₂CH₂- mit m gleich 0 bis 3.
   Bevorzugt stehen die Reste R¹ bis R⁹ unabhängig voneinander für
- Wasserstoff;
- Halogen;
- eine funktionelle Gruppe;
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₁-C₁₈-Alkyl;
- gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₂-C₁₈-Alkenyl;
- gegebenenfalls durch funktionelle Gruppen, Aryl, Alkyl, Aryloxy, Alkyloxy, Halogen, Heteroatome und/oder Heterocyclen substituiertes C₆-C₁₂-Aryl;
- gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkyl;
- gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkenyl; oder
- einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus bedeuten; oder
   zwei benachbarte Reste zusammen für
- einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/ oder Schwefelatome und/oder ein oder mehrere substituierte oder unsubstituierte Iminogruppen unterbrochenen Ring.

Bei gegebenenfalls durch funktionelle Gruppen, Aryl, Alkyl, Aryloxy, Alkyloxy, Halogen, Heteroatome und/oder Heterocyclen substituiertem C₁- C₁₈-Alkyl handelt es sich bevorzugt um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, 2-Etylhexyl, 2,4,4-Trimethylpentyl, 1,1,3,3-Tetrame-thylbutyl, 1-Nonyl, 1-Decyl, 1-Undecyl, 1-Dodecyl, 1-Tridecyl, 1-Tetradecyl, 1-Pentadecyl, 1-Hexadecyl, 1-Heptadecyl, 1-Octadecyl, Cyclopentylmethyl, 2-Cyclopentylethyl, 3-Cyclo-pentylpropyl, Cyclohexylmethyl, 2-Cyclohexylethyl, 3-Cyclohexylpropyl, Benzyl (Phenylmethyl), Diphenylmethyl (Benzhydryl), Triphenylmethyl, 1-Phenylethyl, 2-Phenylethyl, 3-Phenylpropyl, α,α-Dimethylbenzyl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxycarbonylpropyl, 1,2-Di-(methoxy-carbonyl)-ethyl, Methoxy, Ethoxy, Formyl, 1,3-Dioxolan-2-yl, 1,3-Dioxan-2-yl, 2-Methyl-1,3-dioxolan-2-yl, 4-Methyl-1,3-dioxolan-2-yl, 2-Hydroxyethyl, 2-Hydroxypropyl, 3-Hydro-xypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Acetyl, CₘF_{2(m-a)+(1-b)}H_{2a+b} mit m gleich 1 bis 30, 0 ≤ a ≤ m und b = 0 oder 1 (beispielsweise CF₃, C₂F₅, CH₂CH₂-C₍ₘ₋₂₎F₂₍ₘ₋₂₎₊₁, C₆F₁₃, C₈F₁₇, C₁₀F₂₁, C₁₂F₂₅), Chlormethyl, 2-Chlorethyl, Trichlormethyl, 1,1-Dimethyl-2-chlorethyl, Methoxymethyl, 2-Butoxyethyl, Diethoxymethyl, Diethoxyethyl, 2-Isopropoxyethyl, 2-Butoxypropyl, 2-Octyloxyethyl, 2-Methoxyisopropyl, 2-(Methoxycarbonyl)-ethyl, 2-(Ethoxycarbonyl)-ethyl, 2-(n-Butoxycarbonyl)-ethyl, Butylthiomethyl, 2-Dodecylthioethyl, 2-Phenylthioethyl, 5-Hydroxy-3-oxa-pentyl, 8-Hydroxy-3,6-dioxa-octyl, 11-Hydroxy-3,6,9-trioxaundecyl, 7-Hydroxy-4-oxa-heptyl, 11-Hydroxy-4,8-dioxa-undecyl, 15-Hydroxy-4,8,12-trioxa-penta-decyl, 9-Hydroxy-5-oxa-nonyl, 14-Hydroxy-5,10-dioxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-no-nyl, 14-Methoxy-5,10-dioxa-tetradecyl, 5-Ethoxy-3-oxapentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxanonyl oder 14-Ethoxy-5,10-oxa-tetra-decyl.

Bei gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₂-C₁₈-Alkenyl handelt es sich bevorzugt um Vinyl, 2-Propenyl, 3-Butenyl, cis-2-Butenyl, trans-2-Butenyl oder CmF_{2(m-a)-(1-b)}H_{2a-b} mit m ≤ 30, 0 ≤ a ≤ m und b = 0 oder 1.

Bei gegebenenfalls durch funktionelle Gruppen, Aryl, Alkyl, Aryloxy, Alkyloxy, Halogen, Heteroatome und/oder Heterocyclen substituiertes C₆- C₁₂-Aryl handelt es sich bevorzugt um Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2-Nitrophenyl, 4-Nitrophenyl, 2,4-Dinitrophenyl, 2,6-Dinitrophenyl, 4-Dimethylaminophenyl, 4-Acetylphenyl, Methoxyethylphenyl, Ethoxymethylphenyl, Methylthiophenyl, Isopropylthiophenyl oder tert.-Butylthiophenyl oder C₆F₍₅₋ₐ₎Hₐ mit 0 ≤ a ≤ 5.

Bei gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkyl handelt es sich bevorzugt um Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl, CₘF_{2(m-a)-(1-b)}H_{2a-b} mit m ≤ 30, 0 ≤ a ≤ m und b = 0 oder 1 sowie ein gesättigtes oder ungesättigtes bicyclisches System wie z.B. Norbornyl oder Norbornenyl.

Bei gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkenyl handelt es sich bevorzugt um 3-Cyclopentenyl, 2-Cyclohexenyl, 3-Cyclohexenyl, 2,5-Cyclohexadienyl oder CₙF_{2(m-a)-3(1-b)}H_{2a-3b} mit m ≤ 30, 0 ≤ a ≤ m und b = 0 oder 1.

Bei einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus handelt es sich bevorzugt um Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl oder Difluorpyridyl.

Bilden zwei benachbarte Reste gemeinsam einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring, so handelt es sich bevorzugt um 1,3-Propylen, 1,4-Butylen, 1,5-Pentylen, 2-Oxa-1,3-propylen, 1-Oxa-1,3-propylen, 2-Oxa-1,3-propylen, 1-Oxa-1,3-propenylen, 3-Oxa-1,5-pentylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen.

Enthalten die oben genannten Reste Sauerstoff- und/oder Schwefelatome und/oder substituierte oder unsubstituierte Iminogruppen, so ist die Anzahl der Sauerstoff- und/oder Schwefelatome und/oder Iminogruppen nicht beschränkt. In der Regel beträgt sie nicht mehr als 5 in dem Rest, bevorzugt nicht mehr als 4 und ganz besonders bevorzugt nicht mehr als 3.

Enthalten die oben genannten Reste Heteroatome, so befinden sich zwischen zwei Heteroatomen in der Regel mindestens ein Kohlenstoffatom, bevorzugt mindestens zwei Kohlenstoffatome.
Besonders bevorzugt stehen die Reste R¹ bis R⁹ unabhängig voneinander für
- Wasserstoff;
- unverzweigtes oder verzweigtes, unsubstituiertes oder ein bis mehrfach mit Hydroxy, Halogen, Phenyl, Cyano, C₁- C₆-Alkoxycarbonyl und/oder SO₃H substituiertes C₁-C₁₈-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl, 2-Methyl-2-propyl, 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, 2-Hydroxyethyl, Benzyl, 3-Phenylpropyl, 2-Cyanoethyl, 2-(Methoxycar-bonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl, Undecylfluorisopentyl, 6-Hydroxyhexyl und Propylsulfonsäure;
- Glykole, Butylenglykole und deren Oligomere mit 1 bis 100 Einheiten und einem Wasserstoff oder einem C₁- bis C₈-Alkyl als Endgruppe, wie beispielsweise R^{A}O-(CHR^{B}-CH₂-O)ₘ-CHR^{B}-CH₂- oder R^{A}O-(CH₂CH₂CH₂CH₂O)ₘ-CH₂CH₂CH₂CH₂O-mit R^{A} und R^{B} bevorzugt Wasserstoff, Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
- Vinyl; und
- Allyl
- N,N-Di-C₁- bis C₆-alkyl-amino, wie beispielsweise N,N-Dimethylamino und N,N-Diethylamino. Ganz besonders bevorzugt stehen die Reste R¹ bis R⁹ unabhängig voneinander für Wasserstoff oder C₁-C₁₈-Alkyl, wie beispielsweise Methyl, Ethyl, 1-Butyl, 1-Pentyl, 1-Hexyl, 1-Heptyl, 1-Octyl, für Phenyl, für 2-Hydroxyethyl, für 2-Cyanoethyl, für 2-(Methoxycarbo-nyl)ethyl, für 2-(Ethoxycarbonyl)ethyl, für 2-(n-Butoxycarbonyl)ethyl, für N,N-Dimethyl-amino, für N,N-Diethylamino, für Chlor sowie für CH₃O-(CH₂CH₂O)ₘ-CH₂CH₂- und CH₃CH₂O-(CH₂CH₂O)ₘ-CH₂CH₂- mit m gleich 0 bis 3.
   Ganz besonders bevorzugt setzt man als Pyridiniumionen (IIIIa) solche ein, bei denen
- einer der Reste R¹ bis R⁵ Methyl, Ethyl oder Chlor ist und die verbleibenden Reste
   R¹ bis R⁵ Wasserstoff sind;
- R³ Dimethylamino ist und die verbleibenden Reste R¹, R², R⁴ und R⁵ Wasserstoff sind;
- alle Reste R¹ bis R⁵ Wasserstoff sind;
- R² Carboxy oder Carboxamid ist und die verbleibenden Reste R¹, R², R⁴ und R⁵ Wasserstoff sind; oder
- R¹ und R² oder R² und R³ 1,4-Buta-1,3-dienylen ist und die verbleibenden Reste R¹, R², R⁴ und R⁵ Wasserstoff sind; und insbesondere solche, bei denen
- R¹ bis R⁵ Wasserstoff sind; oder
- einer der Reste R¹ bis R⁵ Methyl oder Ethyl ist und die verbleibenden Reste R¹ bis R⁵ Wasserstoff sind.

Als ganz besonders bevorzugte Pyridiniumionen (IIIa) seien genannt 1-Methylpyridinium, 1-Ethylpyridinium, 1-(1-Butyl)pyridinium, 1-(1-Hexyl)pyridinium, 1-(1-Octyl)pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridi-nium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridi-nium, 1-(1-Hexadecyl)-2-methylpyridinium, 1-Methyl-2-ethylpyridinium, 1,2-Diethylpyridi-nium, 1-(1-Butyl)-2-ethylpyridinium, 1-(1-Hexyl)-2-ethylpyridinium, 1-(1-Octyl)-2-ethylpy-ridinium, 1-(1-Dodecyl)-2-ethylpyridinium, 1-(1-Tetradecyl)-2-ethylpyridinium, 1-(1-Hexa-decyl)-2-ethylpyridinium, 1,2-Dimethyl-5-ethyl-pyridinium, 1,5-Diethyl-2-methyl-pyridi-nium, 1-(1-Butyl)-2-methyl-3-ethyl-pyridinium, 1-(1-Hexyl)-2-methyl-3-ethyl-pyridinium und 1-(1-Octyl)-2-methyl-3-ethyl-pyridinium, 1-(1-Dodecyl)-2-methyl-3-ethyl-pyridinium, 1-(1-Tetradecyl)-2-methyl-3-ethyl-pyridinium und 1-(1-Hexadecyl)-2-methyl-3-ethyl-pyri-dinium. Ganz besonders bevorzugt setzt man als Pyridaziniumionen (IIIb) solche ein, bei denen
- R¹ bis R⁴ Wasserstoff sind; oder
- einer der Reste R¹ bis R⁴ Methyl oder Ethyl ist und die verbleibenden Reste R¹ bis R⁴ Wasserstoff sind.
   Ganz besonders bevorzugt setzt man als Pyrimidiniumionen (IIIc) solche ein, bei denen
- R¹ Wasserstoff, Methyl oder Ethyl ist und R² bis R⁴ unabhängig voneinander Wasserstoff oder Methyl sind; oder
- R¹ Wasserstoff, Methyl oder Ethyl ist, R² und R⁴ Methyl sind und R³ Wasserstoff ist.
   Ganz besonders bevorzugt setzt man als Pyraziniumionen (IIId) solche ein, bei denen
- R¹ Wasserstoff, Methyl oder Ethyl ist und R² bis R⁴ unabhängig voneinander Wasserstoff oder Methyl sind;
- R¹ Wasserstoff, Methyl oder Ethyl ist, R² und R⁴ Methyl sind und R³ Wasserstoff
   ist;
- R¹ bis R⁴ Methyl sind; oder
- R¹ bis R⁴ Methyl Wasserstoff sind.
   Ganz besonders bevorzugt setzt man als Imidazoliumionen (IIIe) solche ein, bei denen
- R¹ Wasserstoff, Methyl, Ethyl, 1-Propyl, 1-Butyl, 1-Pentyl, 1-Hexyl, 1-Octyl, Allyl, 2-Hydroxyethyl oder 2-Cyanoethyl und R² bis R⁴ unabhängig voneinander Wasserstoff, Methyl oder Ethyl sind.

Als ganz besonders bevorzugte Imidazoliumionen (IIIe) seien genannt 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethyl-imidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethylimidazolium, 1-(1-Hexyl)-3-butyl-imidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexade-cyl)-3-butylimidazolium, 1-(1-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octylimidazolium.
Ganz besonders bevorzugt setzt man als Pyrazoliumionen (IIIf), (IIIg) beziehungsweise (IIIg') solche ein, bei denen
- R¹ Wasserstoff, Methyl oder Ethyl ist und R² bis R⁴ unabhängig voneinander Wasserstoff oder Methyl sind. Ganz besonders bevorzugt setzt man als Pyrazoliumionen (IIIh) solche ein, bei denen
- R¹ bis R⁴ unabhängig voneinander Wasserstoff oder Methyl sind. Ganz besonders bevorzugt setzt man als 1-Pyrazoliniumionen (IIIi) solche ein, bei denen
- unabhängig voneinander R¹ bis R⁶ Wasserstoff oder Methyl sind. Ganz besonders bevorzugt setzt man als 2-Pyrazoliniumionen (IIIj) beziehungsweise (IIIj') solche ein, bei denen
- R¹ Wasserstoff, Methyl, Ethyl oder Phenyl ist und R² bis R⁶ unabhängig voneinander Wasserstoff oder Methyl sind.
   Ganz besonders bevorzugt setzt man als 3-Pyrazoliniumionen (IIIK) beziehungsweise (IIIk') solche ein, bei denen
- R¹ und R² unabhängig voneinander Wasserstoff, Methyl, Ethyl oder Phenyl sind und R³ bis R⁶ unabhängig voneinander Wasserstoff oder Methyl sind.
   Ganz besonders bevorzugt setzt man als Imidazoliniumionen (IIIl) solche ein, bei denen
- R¹ und R² unabhängig voneinander Wasserstoff, Methyl, Ethyl, 1-Butyl oder Phenyl sind, R³ und R⁴ unabhängig voneinander Wasserstoff, Methyl oder Ethyl sind und R⁵ und R⁶ unabhängig voneinander Wasserstoff oder Methyl sind.
   Ganz besonders bevorzugt setzt man als Imidazoliniumionen (IIIm) beziehungsweise (IIIm') solche ein, bei denen
- R¹ und R² unabhängig voneinander Wasserstoff, Methyl oder Ethyl sind und R³ bis R⁶ unabhängig voneinander Wasserstoff oder Methyl sind.
   Ganz besonders bevorzugt setzt man als Imidazoliniumionen (IIIn) beziehungsweise (IIIn') solche ein, bei denen
- R¹ bis R³ unabhängig voneinander Wasserstoff, Methyl oder Ethyl sind und R⁴ bis R⁶ unabhängig voneinander Wasserstoff oder Methyl sind.
   Ganz besonders bevorzugt setzt man als Thiazoliumionen (IIIo) beziehungsweise (II-Io') sowie als Oxazoliumionen (IIIp) solche ein, bei denen
- R¹ Wasserstoff, Methyl, Ethyl oder Phenyl ist und R² und R³ unabhängig voneinander Wasserstoff oder Methyl sind.
   Ganz besonders bevorzugt setzt man als 1,2,4-Triazoliumionen (IIIq), (IIIq') beziehungsweise (IIIq") solche ein, bei denen
- R¹ und R² unabhängig voneinander Wasserstoff, Methyl, Ethyl oder Phenyl sind und R³ Wasserstoff, Methyl oder Phenyl ist.
   Ganz besonders bevorzugt setzt man als 1,2,3-Triazoliumionen (IIIr), (IIIr') beziehungsweise (IIIr") solche ein, bei denen
- R¹ Wasserstoff, Methyl oder Ethyl ist und R² und R³ unabhängig voneinander Wasserstoff oder Methyl sind, oder R² und R³ zusammen 1,4-Buta-1,3-dienylen ist.
   Ganz besonders bevorzugt setzt man als Pyrrolidiniumionen (IIIs) solche ein, bei denen
- R¹ Wasserstoff, Methyl, Ethyl oder Phenyl ist und R² bis R⁹ unabhängig voneinander Wasserstoff oder Methyl sind.
   Ganz besonders bevorzugt setzt man als Imidazolidiniumionen (IIIt) solche ein, bei denen
- R¹ und R⁴ unabhängig voneinander Wasserstoff, Methyl, Ethyl oder Phenyl sind und R² und R³ sowie R⁵ bis R⁸ unabhängig voneinander Wasserstoff oder Methyl sind.
   Ganz besonders bevorzugt setzt man als Ammoniumionen (IIIu) solche ein, bei denen
- R¹ bis R³ unabhängig voneinander C₁-C₁₈-Alkyl sind; oder
- R¹ und R² zusammen 1,5-Pentylen oder 3-Oxa-1,5-pentylen sind und R³ C₁-C₁₈-Alkyl, 2-Hydroxyethyl oder 2-Cyanoethyl ist.
   Als ganz besonders bevorzugte Ammoniumionen (IIIu) seien genannt Methyl-tri-(1-butyl)-ammonium, N,N-Dimethylpiperidinium und N,N-Dimethylmorpholinium.
   Beispiele für die tertiären Amine, von denen sich die quartären Ammoniumionen der allgemeinen Formel (IIIu) durch Quaternisierung mit den genannten Resten R ableiten, sind Diethyl-n-butylamin, Diethyl-tert-butylamin, Diethyl-n-pentylamin, Diethylhexylamin, Diethyloctylamin, Diethyl-(2-ethylhexyl)-amin, Di-n-propylbutylamin, Di-n-propyl-n-pentyl-amin, Di-n-propylhexylamin, Di-n-propyloctylamin, Di-n-propyl-(2-ethylhexyl)-amin, Di-isopropylethylamin, Di-iso-propyl-n-propylamin, Di-isopropyl-butylamin, Di-iso-propyl-pentylamin, Di-iso-propylhexylamin, Di-isopropyloctylamin, Di-iso-propyl-(2-ethylhexyl)-amin, Di-n-butylethylamin, Di-n-butyl-n-propylamin, Di-n-butyl-n-pentylamin, Di-n-butylhexylamin, Di-n-butyloctylamin, Di-n-butyl-(2-ethylhexyl)-amin, N-n-Butyl-pyrrolidin, N-sek-Butylpyrrodidin, N-tert-Butylpyrrolidin, N-n-Pentylpyrrolidin, N,N-Dimethyl-cyclohexylamin, N,N-Diethylcyclohexylamin, N,N-Di-n-butylcyclohexylamin, N-n-Propyl-piperidin, N-iso-Propylpiperidin, N-n-Butyl-piperidin, N-sek-Butylpiperidin, N-tert-Butylpiperidin, N-n-Pentylpiperidin, N-n-Butylmorpholin, N-sek-Butylmorpholin, N-tert-Butylmorpholin, N-n-Pentylmorpholin, N-Benzyl-N-ethylanilin, N-Benzyl-N-n-propylanilin, N-Benzyl-N-iso-propylanilin, N-Benzyl-N-n-butylanilin, N,N-Dimethyl-p-toluidin, N,N-Diethyl-p-tolui-din, N,N-Di-n-butyl-p-toluidin, Diethylbenzylamin, Di-n-propylbenzylamin, Di-n-butyl-benzylamin, Diethylphenylamin, Di-n-Propylphenylamin und Di-n-Butylphenylamin.
   Bevorzugte tertiäre Amine sind Di-iso-propylethylamin, Diethyl-tert-butylamin, Di-isopro-pylbutylamin, Di-n-butyl-n-pentylamin, N,N-Di-n-butylcyclohexylamin sowie tertiäre Amine aus Pentylisomeren.
   Besonders bevorzugte tertiäre Amine sind Di-n-butyl-n-pentylamin und tertiäre Amine aus Pentylisomeren. Ein weiteres bevorzugtes tertiäres Amin, das drei identische Reste aufweist, ist Triallylamin.
   Ganz besonders bevorzugt setzt man als Guanidiniumionen (IIIv) solche ein, bei denen
- R¹ bis R⁵ Methyl sind.
   Als ganz besonders bevorzugtes Guanidiniumion (IIIv) sei genannt N,N,N',N',N",N"-Hexamethylguanidinium.
   Ganz besonders bevorzugt setzt man als Choliniumionen (IIIw) solche ein, bei denen
- R¹ und R² unabhängig voneinander Methyl, Ethyl, 1-Butyl oder 1-Octyl sind und R³
   Wasserstoff, Methyl, Ethyl, Acetyl, -SO₂OH oder -PO(OH)₂ ist;
- R¹ Methyl, Ethyl, 1-Butyl oder 1-Octyl ist, R² eine -CH₂-CH₂-OR⁴-Gruppe ist und R³ und R⁴ unabhängig voneinander Wasserstoff, Methyl, Ethyl, Acetyl,-SO₂OH oder - PO(OH)₂ sind; oder
- R¹ eine -CH₂-CH₂-OR⁴-Gruppe ist, R² eine -CH₂-CH₂-OR⁵-Gruppe ist und R³ bis R⁵ unabhängig voneinander Wasserstoff, Methyl, Ethyl, Acetyl, -SO₂OH oder - PO(OH)₂ sind.
   Besonders bevorzugte Choliniumionen (IIIw) sind solche, bei denen R³ ausgewählt ist aus Wasserstoff, Methyl, Ethyl, Acetyl, 5-Methoxy-3-oxa-pentyl, 8-Methoxy-3,6-dioxaoctyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.
   Als ganz besonders bevorzugte Choliniumionen (IIIw) seien genannt Trimethyl-2-hydroxy-ethylammonium, Dimethyl-bis-2-hydroxyethylammonium oder Methyl-tris-2-hydroxyethyl-ammonium. Ganz besonders bevorzugt setzt man als Phosphoniumionen (IIIx) solche ein, bei denen
- R¹ bis R³ unabhängig voneinander C₁-C₁₈-Alkyl, insbesondere Butyl, Isobutyl, 1-Hexyl oder 1-Octyl sind.
   Unter den vorstehend genannten heterocyclischen Kationen sind die Pyridiniumionen, Pyrazolinium-, Pyrazoliumionen und die Imidazolinium- sowie die Imidazoliumionen bevorzugt. Weiterhin sind Ammonium- sowie Choliniumionen bevorzugt.
   Insbesondere bevorzugt sind 1-Methylpyridinium, 1-Ethylpyridinium, 1-(1-Butyl)pyridinium, 1-(1-Hexyl)pyridinium, 1-(1-Octyl)pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1,2-Dime-thyl-5-ethyl-pyridinium, 1,5-Diethyl-2-methyl-pyridinium, 1-(1-Butyl)-2-methyl-3-ethyl-pyridinium, 1-(1-Hexyl)-2-methyl-3-ethyl-pyridinium, 1-(1-Octyl)-2-methyl-3-ethyl-pyridinium, 1-(1-Dodecyl)-2-methyl-3-ethyl-pyridinium, 1-(1-Tetradecyl)-2-methyl-3-ethyl-pyridinium, 1-(1-Hexadecyl)-2-methyl-3-ethyl-pyridinium, 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethyl-imidazolium, 1-Ethyl-3-methylimidazolium, 1-(1-Butyl)-3-methylimidazolium, 1-(1-Hexyl)-3-methylimidazolium, 1-(1-Octyl)-3-methylimidazolium, 1-(1-Dodecyl)-3-methylimidazolium, 1-(1-Tetradecyl)-3-methylimidazolium, 1-(1-Hexadecyl)-3-methylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethylimidazolium und 1-(1-Octyl)-2,3-dimethylimidazolium, 1,4-Dimethylimidazolium, 1,3,4-Trimethylimidazolium, 1,4-Dimethyl-3-ethylimidazolium, 3-Butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trime-thyl-3-butylimidazolium,1,4,5-Trimethyl-3-octylimidazolium, Trimethyl-2-hydroxyethylammonium, Dimethyl-bis-2-hydroxyethylammonium und Methyl-tris-2-hydroxyethylammonium.

Als Anionen sind prinzipiell alle Anionen einsetzbar.
Das Anion [Y]ⁿ⁻ der ionischen Flüssigkeit ist beispielsweise ausgewählt aus
- der Gruppe der Halogenide und halogenhaltigen Verbindungen der Formel: F⁻, Cl⁻, Br⁻, I⁻, BF₄⁻, PF₆⁻, CF₃SO₃⁻, (CF₃SO₃)₂N⁻, CF₃CO₂⁻, CCl₃CO₂⁻, CN⁻, SCN⁻, OCN⁻
- der Gruppe der Sulfate, Sulfite und Sulfonate der allgemeinen Formel: SO₄²⁻, HSO₄⁻, SO₃²⁻, HSO₃⁻, R^{a}OSO₃⁻, R^{a}SO₃⁻
- der Gruppe der Phosphate der allgemeinen Formel PO₄³⁻, HPO₄²⁻, H₂PO₄⁻, R^{a}PO₄²⁻, HR^{a}PO₄⁻, R^{a}R^{b}PO₄⁻
- der Gruppe der Phosphonate und Phosphinate der allgemeinen Formel: R^{a}HPO₃⁻,R^{a}R^{b}PO₂⁻, R^{a}R^{b}PO₃⁻
- der Gruppe der Phosphite der allgemeinen Formel: PO₃³⁻, HPO₃²⁻, H₂PO₃⁻, R^{a}PO₃²⁻, R^{a}HPO₃⁻, R^{a}R^{b}PO₃⁻
- der Gruppe der Phosphonite und Phosphinite der allgemeinen Formel: R^{a}R^{b}PO₂⁻, R^{a}HPO₂⁻, R^{a}R^{b}PO⁻, R^{a}HPO⁻
- der Gruppe der Carbonsäuren der allgemeinen Formel: R^{a}COO⁻
- der Gruppe der Borate der allgemeinen Formel: BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c})(OR^{d})⁻, B(HSO₄)⁻, B(R^{a}SO4)⁻
- der Gruppe der Boronate der allgemeinen Formel: RaBO₂²⁻, R^{a}R^{b}BO⁻
   - der Gruppe der Silikate und Kieselsäuresäureester der allgemeinen Formel:

   SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻,
   H₂R^{a}SiO₄⁻, HR^{a}R^{b}SiO₄⁻
   • der Gruppe der Alkyl- bzw. Arylsilan-Salze der allgemeinen Formel: R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻, R^{a}R^{b}SiO₃²⁻
   • der Gruppe der Carbonsäureimide, Bis(sulfonyl)imide und Sulfonylimide der allgemeinen Formel: 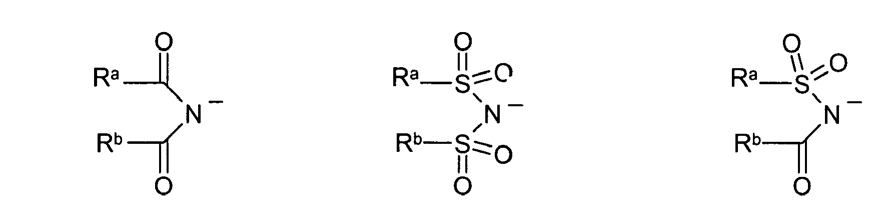
   • der Gruppe der Methide der allgemeinen Formel:

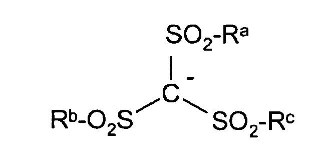

Darin bedeuten R^{a}, R^{b}, R^{c} und R^{d} unabhängig voneinander jeweils Wasserstoff, C₁-C₃₀-Alkyl, gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl, C₆-C₁₄-Aryl, C₅-C₁₂-Cycloalkyl oder einen fünfbis sechsgliedrigen, Sauerstoff-, Stickstoff- und/oder Schwefelatome aufweisenden Heterocyclus, wobei zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen Ring bilden können, wobei die genannten Reste jeweils zusätzlich durch funktionelle Gruppen, Aryl, Alkyl, Aryloxy, Alkyloxy, Halogen, Heteroatome und/oder Heterocyclen substituiert sein können.

Darin sind gegebenenfalls durch funktionelle Gruppen, Aryl, Alkyl, Aryloxy, Alkyloxy, Halogen, Heteroatome und/oder Heterocyclen substituiertes -C₁-C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, α,α-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxo-lan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenlythioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl sind beispielsweise 5-Hydroxy-3-oxapentyl, 8-Hydroxy-3,6-dioxaoctyl, 11-Hydroxy-3,6,9-trioxaundecyl, 7-Hydroxy-4-oxaheptyl, 11-Hydroxy-4,8-dioxaundecyl, 15-Hydroxy-4,8,12-trioxapentadecyl, 9-Hydroxy-5-oxanonyl, 14-Hydroxy-5,10-oxatetradecyl, 5-Methoxy-3-oxapentyl, 8-Methoxy-3,6-dioxaoctyl, 11-Methoxy-3,6,9-trioxaundecyl, 7-Methoxy-4-oxaheptyl, 11-Methoxy-4,8-dioxaundecyl, 15-Methoxy-4,8,12-trioxapentadecyl, 9-Methoxy-5-oxanonyl, 14-Methoxy-5,10-oxatetradecyl, 5-Ethoxy-3-oxapentyl, 8-Ethoxy-3,6-dioxaoctyl, 11-Ethoxy-3,6,9-trioxaundecyl, 7-Ethoxy-4-oxaheptyl, 11-Ethoxy-4,8-dioxaundecyl, 15-Ethoxy-4,8,12-trioxapentadecyl, 9-Ethoxy-5-oxanonyl oder 14-Ethoxy-5,10-oxatetradecyl.
Bilden zwei Reste einen Ring, so können diese Reste gemeinsam beispielsweise als anellierter Baustein 1,3-Propylen, 1,4-Butylen, 2-Oxa-1,3-propylen, 1-Oxa-1,3-propylen, 2-Oxa-1,3-propenylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen bedeuten.

Die Anzahl der nicht-benachbarten Sauerstoff- und/oder Schwefelatome und/oder Iminogruppen ist grundsätzlich nicht beschränkt, bzw. beschränkt sich automatisch durch die Größe des Rests oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).
Substituierte und unsubstituierte Iminogruppen können beispielsweise Imino-, Methylimino-, iso-Propylimino, n-Butylimino oder tert-Butylimino sein.
Unter dem Begriff "funktionelle Gruppen" sind beispielsweise die folgenden zu verstehen: Carboxy, Carboxamid, Hydroxy, Di-(C₁-C₄-Alkyl)-amino, C₁-C₄-Alkyloxycarbonyl, Cyano oder C₁-C₄-Alkoxy. Dabei ist C₁ bis C₄-Alkyl Methyl, Ethyl, Propyl, Isopropyl, n-Butyl, sec-Butyl oder tert.-Butyl.
Gegebenenfalls durch funktionelle Gruppen, Aryl, Alkyl, Aryloxy, Alkyloxy, Halogen, Heteroatome und/oder Heterocyclen substituiertes C₆-C₁₄-Aryl sind beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.
Gegebenenfalls durch funktionelle Gruppen, Aryl, Alkyl, Aryloxy, Halogen, Heteroatome und/oder Heterocyclen substituiertes C₅-C₁₂-Cycloalkyl sind beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie Norbornyl oder Norbornenyl.

Ein fünf- bis sechsgliedriger, Sauerstoff-, Stickstoff- und/oder Schwefelatome aufweisender Heterocyclus ist beispielsweise Furyl, Thiophenyl, Pyryl, Pyridyl, Indolyl, Benzoxazolyl, Dioxolyl, Dioxyl, Benzimidazolyl, Benzthiazolyl, Dimethylpyridyl, Methylchinolyl, Dimethylpyryl, Methoxifuryl, Dimethoxipyridyl, Diflourpyridyl, Methylthiophenyl, Isopropylthiophenyl oder tert.-Butylthiophenyl.
Es versteht sich von selbst, dass auch im Einzelfall der Einsatz einer gezielt eingestellten Mischung verschiedener oben bezeichneter ionischer Flüssigkeiten vorteilhaft vorgenommen werden kann. Im Rahmen der Erfindung hat es sich gezeigt, dass ionische Flüssigkeiten mit einem Imidazolium-Kation in dem betreffenden Salz von besonderem Vorteil sind. Ganz besonders bevorzugt ist es hier, wenn die 1- sowie 3-Stellung oder die 1-, 2- sowie 3-Stellung des Imidazolium-Rings mit einer (C₁-C₆)-Alky-Gruppe substituiert sind. Von besonderem Vorteil hat es sich erwiesen, wenn das Imidazolium-Kation ein 1-Ethyl-3-methylimidazolium-, 1,3-Dimethylimidazolium- oder ein 1-Butyl-3-methylimidazolium-Kation ist.
Die oben dargestellten Kationen der ionischen Flüssigkeiten sind auch bezüglich der Wahl des korrespondierenden Anions nicht wesentlich eingeschränkt. Besonders bevorzugt ist es, wenn das Anion zu dem jeweiligen Kation ein Halogenid-, Perchlorat-, Pseudohalogenid-, Sulfat-, insbesondere Hydrogensulfat-, Sulfilt-, Sulfonat-, Phosphat-, Alkylphosphat-, insbesondere das Mono- und/oder Dialkylphosphat-Anion (bevorzugte Alkylgruppe Me-thyl-, Ethyl- oder Propylgruppe) und/oder ein Carboxylat-Anion, insbesondere ein C₁-C₆-Carboxylat-Anion (vorzugsweise Acetat- oder Proprionat-Anion) ist. Es wird besonders bevorzugt, wenn das Halogenid-Ion als Chlorid-, Bromid- und/oder Iodid-Ion, das Pseudohalogenid-Ion als Cyanid-, Thiocyanat-, Cyanid- und/oder Cyanat-Ion und das C₁-C₆-Carboxylat-Ion als Formiat-, Acetat-, Propionat-, Butyrat-, Hexanoat-, Maleat-, Fumarat-, Oxalat-, Lactat-, Pyruvat, Methansulfonat-, Tosylat- und/oder Alkansulfate-Ion vorliegen.

### Der Ordnung halber sollen noch folgende vorteilhafte Anionen bezeichnet werden:

R^{a}-COO⁻, R⁻aSO⁻₃, R^{a}R^{b}PO⁻₄ (worin R^{a} und R^{b} die vorstehend bereits dargestellte Bedeutung haben), wozu insbesondere die Anionen der Formel (CH₃O)₂PO₂⁻ und (C₂H₅O)₂PO₂⁻sowie das Benzoat-Anion zählen, vorzugsweise (C₂H₅O)₂PO₂⁻ sowie das Benzoat-Anion.
Dem Fachmann ist es ohne Weiteres möglich, für den jeweiligen Anwendungsfall der Erfindung die besonders geeignete ionische Flüssigkeit einzusetzen. Besonders bevorzugte ionische Flüssigkeiten sind: 1-Ethyl-3-methylimidazolium-acetat, 1,3-Dimethylimidazolium-acetat, 1-Butyl-3-methylimidazolium-acetat, 1-Ethyl-3-methylimidazoliumchlorid, 1-Ethyl-3-methylimidazolium-diethylphosphat, 1-Methyl-3-methylimidazoliumdimethylphosphat, 1-Ethyl-3-methylimidazolium-formiat, 1-Ethyl-3-methylimidazoliumoctanoat, 1,3-Diethylimidazolium-acetat und 1-Ethyl-3-methylimidazolium-propionat. Hierunter sind ganz besonders bevorzugt: 1-Ethyl-3-methylimidazolium-acetat, 1,3-Dimethylimidazolium-acetat, 1-Butyl-3-methylimidazolium-acetat, 1-Ethyl-3-methylimidazolium-diethylphosphat, 1-Methyl-3-methylimidazolium-dimethylphosphat, 1,3-Diethyl-imidazoliumacetat und 1-Ethyl-3-methylimidazolium-propionat.

Es ist ohne Weiteres ersichtlich, dass es vielfältige Möglichkeiten gibt, eine besonders geeignete ionische Flüssigkeit für den jeweiligen Anwendungszweck auszuwählen, dies insbesondere auch im Hinblick auf den jeweiligen anionischen und kationischen Teil. Unter der Vielzahl der oben dargestellten Möglichkeiten sollen nachfolgend verschiedene Anionen, Kationen sowie Anionen-/ Kationen-Paare als bevorzugt herausgestellt werden:
Anionen: R***^{a}***COO-, worin bedeuten: R***^{a}*** vorzugsweise Alkyl, insbesondere C₁-C₈-Alkyl und ganz besonders bevorzugt C₁-C₃-Alkyl, oder Phenyl; Phosphat, vorzugsweise Dialkylphosphat, insbesondere Di-(C₁-C₃-Alkyl)phosphat, wobei be sonders bevorzugt ist Dimethylphosphat, Diethylphosphat und Di-n-propylphosphat; Phosphonat, insbesondere O-Alkyl-alkylphosphonat, wobei besonders bevorzugt ist O-Methyl-methylphosphonat, O-Methyl-ethylphosphonat, O-Ethyl-methylphosphonat und O-Ethylethylphosphonat.
Kationen: Verbindungen der vorstehend bereits bezeichneten Formel IIIe, insbesondere 1-Ethyl-3-methylimidazolium (EMIM), 1-Butyl-3-methylimidazolium (BMIM), 1-Ethyl-2,3-dimethylimidazolium (EMMIM) und 1-Butyl-2,3-dimethylimidazolium (BMMIM); Verbindungen der vorstehend bezeichneten Formel IIIa, insbesondere N-Alkyl-pyryidinium, besonders bevorzugt N-Methyl-pyridinium, N-Ethylpyridinium, N-Methyl-2-methylpyridinium, N-Methyl-3-methylpyridinium, N-Ethyl-2-methylpyridinium und N-Ethyl-3-methyl-pyridinium; Verbindungen der vorstehend bezeichneten Formel IIIf, insbesondere 1,2,4-Trimethylpyrazolium.
   Für eine besonders bevorzugte Kombination Anion + Kation unter den vorstehend dargestellten Möglichkeiten können angegeben werden: R***^{a}***COO⁻ + Verbindungen der vorstehend bezeichneten Formel IIIe und Phosphat + Verbindungen der vorstehend bezeichneten Formel IIIe.
   Ferner sei darauf hingewiesen, dass die nachfolgenden Darstellungen vorteilhafte Ausgestaltungen der Erfindung betreffen, insbesondere die oben im Einzelnen detailliert dargestellten Verbindungen. Sollte im Einzelfall auf eine spezielle ionische Flüssigkeit Bezug genommen werden, dann ist es für den Fachmann ohne Weiteres ersichtlich, dass diese Aussagen gleichermaßen auch für die weiteren dargestellten ionischen Flüssigkeiten gelten.
   Ein möglicher Grund für den besonderen Vorteil der vorstehend bezeichneten Anionen könnte darin liegen, dass diese besonders starke Wasserstoff-bindende Akzeptoren sind und dies ein Grund für die guten Lösungsergebnisse ist. Alle diese Anionen sind als Wasserstoff-bindende Akzeptoren bekannt und nehmen an einem ausgedehnten Wasserstoff-Bindungsnetzwerk teil. Es ist dem Fachmann überlassen, hier anhand von einfachen Tests zu ermitteln, welche Anionen im Einzelfall für das jeweils gewählte Kohlenhydrat, das gelöst und regeneriert werden soll, besonders geeignet sind.

Wie die obigen Darstellungen zeigen, ist die vorliegende Erfindung in der Wahl der ionischen Flüssigkeiten nicht eingeschränkt. Als bevorzugt kann es herausgestellt werden, dass ionische Flüssigkeit ein Kation mit Amidiniumstruktur enthält. Dabei ist das Kation vorzugsweise ein substituiertes oder unsubstituiertes Imidazolium-Kation. Das Imidazolium-Kation der ionischen Flüssigkeit ist vorzugsweise in der 1- sowie 3-Stellung oder in der 1-, 2- sowie 3-Stellung mit (C₁-C₆)-Alkylgruppen substituiert. Besonders bevorzugt ist es, wenn das Imidazolium-Kation das 1-Ethyl-3-methylimidazolium-, 1,3-Dimethylimidazolium-, 1-3-Diethylimidazolium- oder das 1-Butyl-3-methyl-imidazolium-Kation ist.

Bevorzugt ist es, wenn das Anion der ionischen Flüssigkeit ein Halogenid-, Perchlorat-, Pseudohalogenid-, Sulfat-, Phosphat-, Alkylphosphat-, insbesondere ein C₁-C₆-Carboxylat-Ion ist. Ferner wird es bevorzugt, dass das Halogenid-Ion als Chlorid-, Bromid- und/oder Iodid-Ion, das Pseudohalogenid-Ion als Cyanid-, Thiocyanat- und/oder Cyanat-Ion und das C₁-C₆-Carboxylat-Ion als Formiat-, Acetat-, Propionat-, Butyrat-, Hexanoat-, Maleat-, Fumarat-, Oxalat-, Lactat- und/oder Pyruvat-Ion vorliegt. Folgende ionische Flüssigkeiten haben sich als besonders bevorzugt erwiesen: 1-Ethyl-3-methylimidazolium-acetat, 1,3-Dimethylimid-azolium-acetat, 1-Ethyl-3-methyl-imidazolium-chlorid, 1-Butyl-3-methyl-imid-azolium-acetat, 1-Ethyl-3-methyl-imidazolium-diethylphosphat, 1-Methyl-3-methylimid-azolium-dimethylphos-phat, 1-Ethyl-3-methylimidazolium-formiat, 1-Ethyl-3-methylimid-azolium-octanoat, 1,3-Di-ethylimidazoliumacetat, 1,3-Diethylimidazolium-chlorid und/ oder 1-Ethyl-3-methylimidazolium-propionat.
Für die Zwecke der Erfindung ist es von Vorteil, wenn die geschmolzene ionische Flüssigkeit einen Schmelzpunkt von -100 bis +150 °C, insbesondere von -30 bis +100 °C, aufweist, wobei der Bereich von -30 bis +80 °C besonders bevorzugt ist. Die ionischen Flüssigkeiten eines Schmelzpunktes von mehr als 100 °C können insbesondere dann eingesetzt werden, wenn ein thermischer Abbau des darin gelösten Biopolymers ausgeschlossen werden kann. In der Mehrzahl der Fälle ist es vorteilhaft, diesen Höchstwert nicht zu überschreiten. Das oben bezeichnete Lösungssystem steht zur Verfügung, um darin beliebige Biopolymere zu lösen und einer Regenerierung in einem Koagulationsmedium, zu unterziehen, das bezüglich der Auswahl des darin eingesetzten Koagulationsmittels oder Koagulationsmittelgemisches den oben definierten Rahmenbedingungen zur Oberflächenspannung gemäß der Erfindung einhält.

Vorzugsweise liegen die Biopolymeren in Form von Kohlenhydraten als Stärke, Cellulose und/oder Derivate von Stärke und Cellulose vor. Bevorzugt ist es, wenn die Derivate Ester oder Ether darstellen. Bei den Estern kann es sich um Celluloseacetat und Cellulosebutyrat und bei den Ethern um Carboxymethylcellulose, Hydroxyethylcellulose und Hydroxypropylcellulose handeln.

Bei der Quantifizierung der zu lösenden Biopolymeren unterliegt die Erfindung keiner wesentlichen Einschränkung. Vorzugsweise werden die Stärke, die Cellulose und/oder deren Derivate in dem Lösungssystem in einer Menge von 1 bis 35 Gew.-%, insbesondere in einer Menge von etwa 5 bis 20 Gew.-%, eingesetzt. Wird der Wert von etwa 1 Gew.-% unterschritten, dann stellt sich die wünschenswerte Wirtschaftlichkeit nicht ein.
Im Hinblick auf die angestrebte Qualität des regenerierten Biopolymers ist es zweckmäßig, die Stärke, die Cellulose und/oder deren Derivate weitgehend in dem Lösungssystem zu lösen. Dies begünstigt eine vorteilhafte Qualität. Daher ist es zweckmäßig, wenn das Auflösen in dem Lösungssystem bei etwa 20 bis 150 °C, insbesondere bei etwa 30 bis 120 °C, erfolgt.
Bei der angestrebten Regenerierung der in dem bezeichneten Lösungssystem gelösten Biopolymere in Form von Kohlenhydraten in dem Koagulationsmedium ist es zweckmäßig, die Viskosität des Lösungssystems gezielt einzustellen. Zweckmäßigerweise liegt die Nullviskosität dieses Lösungssystems (gemessen mit einem Rotationsviskosimeter) zwischen etwa 5 und 150.000 Pa.s, insbesondere zwischen etwa 10 und 100.000 Pa.s. Weitergehend ist bevorzugt, wenn die Nullviskosität zwischen etwa 5 und 10.000 Pa.s, insbesondere zwischen etwa 10 und 2.500 Pa.s liegt, wobei in diesem Rahmen der Nullviskosität die Verarbeitung des Lösungssystems beispielsweise in einem Extruder besonders vorteilhaft ist.

Von besonderem Wert für die Regenerierung von Cellulose bzw. deren Derivaten anhand des erfindungsgemäßen Lösungssystems ist es, wenn diese einen durchschnittlichen Polymerisationsgrad von etwa 200 bis 3500, insbesondere von etwa 300 bis 1500, aufweisen. Durch die Verarbeitung höher molekularer Cellulose (DP größer 800) werden vorteilhafte Produkteigenschaften, wie beispielsweise Festigkeit, Modul und Steifigkeit erreicht.

Zwar ist es nicht Bestandteil der vorliegenden Erfindung, ein Verfahren zur Herstellung des oben bezeichneten Lösungssystems auf der Basis einer geschmolzenen ionischen Flüssigkeit mit einem Gehalt an zu regenerierenden Biopolymeren zu bezeichnen. Ein entsprechendes Verfahren geht bereits aus der PCT/EP2006/012748 hervor. Dennoch soll zur besseren Ausübung der vorliegenden Erfindung dargestellt werden, auf welche Weise ein besonders geeignetes und die Biopolymere enthaltendes Lösungssystem hergestellt werden kann: Danach wird das Biopolymer in Form des Kohlenhydrats, insbesondere Cellulose, Stärke und/oder Derivate hiervon, mit der geschmolzenen ionischen Flüssigkeit, wie vorstehend definiert, so lange gemischt, bis das Auflösen in dem erforderlichen Umfang durchgeführt worden ist, insbesondere vollständig ist. Zu den besonderen quantitativen Ausgestaltungen wird auf die vorstehenden Ausführungen verwiesen.

Das Mischen der Ausgangsbestandteile des Lösungssystems, enthaltend Biopolymere, erfolgt vorzugsweise unter Einwirkung hoher Scherkräfte, insbesondere anhand eines Extruders. Hierbei hat sich ein Doppelschneckenextruder als besonders vorteilhaft erwiesen. Das Auflösen wird dadurch weitergehend begünstigt, indem beim Mischen gleichzeitig mit Mikrowellen bestrahlt wird, insbesondere Ultraschall zur Einwirkung kommt. Begünstigt wird das Auflösen der Biopolymere durch Anheben der Temperatur des Lösungssystems. Zweckmäßigerweise beträgt die erhöhte Temperatur etwa 20 bis 150 °C, insbesondere etwa 30 bis 120 °C.

Es wurde vorstehend bereits dargelegt, dass beliebige Biopolymere im Rahmen der Erfindung vorteilhaft behandelt bzw. weiterverarbeitet und regeneriert werden können.

Von besonderem Vorteil ist das erfindungsgemäße Verfahren zur regenerierenden Aufarbeitung von Celluloseausgangsmaterialien. Das Celluloseausgangsmaterial liegt vorzugsweise als faserige Cellulose, insbesondere Holzpulpe, Linters, Papier, und/oder in Form anderer Naturcellulosefasern vor. Unter den Naturcellulosefasern können Hanf-, Kokos-, Jute-, Bambus- und/oder Sisal-Fasern als vorteilhaft herausgestellt werden. Im Hinblick auf die angestrebte optimale Qualität des regenerierten Biopolymers, insbesondere von regenerierter Cellulose, hat es sich als zweckmäßig erwiesen, nicht nur eine oder mehrere der vorstehend angesprochenen bevorzugten Maßnahmen zu ergreifen, beispielsweise das Entgasen, sondern das Lösungssystem, das das Biopolymer enthält, vor der Weiterverarbeitung über ein Filter zu filtrieren, insbesondere unter Druckbeaufschlagung oder unter Vakuum, um beispielsweise eventuell vorhandene ungelöste Teilchen, aber auch ein eventuell gebildetes Mikrogel auszuschließen. Das bedeutet, dass ein "vollständiges Lösen" angestrebt werden soll. Diese vollständige Lösung lässt sich dadurch erhalten, dass man die Lösung des Biopolymers durch ein Filtergewebe mit einer Maschenweite von als 25 Mesh filtrieren lässt, die filtrierte Lösung klar und deren Fließverhalten strukturviskos ist, so dass sie dann keine Gelteilchen enthält und damit technisch besonders vorteilhaft weiterverarbeitbar ist. Es ist von Vorteil, wenn die Menge an Mikrogel unter 2 Gew.-% liegt.
Zur Qualitätsverbesserung des angestrebten Verfahrenserzeugnisses ist es zweckmäßig, wie bereits vorstehend angesprochen, das Lösungssystem vor der Weiterverarbeitung zur Regenerierung der darin enthaltenen Biopolymere, insbesondere Cellulose, zu entgasen, was zweckmäßigerweise unter Rühren und/oder unter Vakuum durchgeführt wird. Hierüber gibt es keine speziellen Rahmenbedingungen.
Um den erfindungsgemäßen Gedanken bei der Regenerierung von Biopolymeren, insbesondere Cellulose, zu optimieren, ist es zweckmäßig, der Viskosität des Lösungssystems mit dem gelösten Biopolymer Aufmerksamkeit zuzuwenden. So ist es von Vorteil, wenn z.B. das Cellulose enthaltende Lösungssystem eine hohe Viskosität aufweist. Im Rahmen der Erfindung ist es zweckmäßig, hier eine Nullviskosität (gemessen mit einem Rotationsviskosimeter) zwischen etwa 5 und 150.000 Pa.s einzustellen, insbesondere zwischen 10 und 100.000 Pa.s, wobei der Bereich von 100 bis 90.000 besonders bevorzugt ist. Der Gehalt an Cellulose in dem Lösungssystem liegt vorzugsweise zwischen etwa 5 und 30 Gew.-%, während der durchschnittliche Polymerisationsgrad insbesondere bis zu 3500 beträgt, und ganz besonders bevorzugt zwischen etwa 300 bis 1500 liegen sollte. In Einzelfällen ist es besonders vorteilhaft, den Mindestwert auf etwa 350 und den Höchstwert auf etwa 1500 einzustellen. Die obigen Angaben zur Cellulose gelten, was hervorgehoben werden soll, gleichermaßen für Derivate, insbesondere in Form der Ester und Ether.

Zwar ist es für die erfolgreiche Verwirklichung der Erfindung nicht erforderlich, zwingend spezielle Additive einzubeziehen. Zur Einstellung besonderer Eigenschaften des gewonnenen ausgefällten Materials, insbesondere in Form von Filamenten oder Stapelfasern von Cellulose, können aber Additive hinzugefügt werden. Diese können an verschiedenen Stellen des erfindungsgemäßen Verfahrens eingesetzt werden. So können sie dem die Biopolymere enthaltenden Lösungssystem, dem Koagulationsmedium und/oder in einem nachgeschalteten Schritt, beispielsweise in einem Modifizierungsmedium, eingesetzt werden. Bei den Additiven kann es sich beispielsweise um Mikrokapseln, Porenbildner, Weichmacher, Mattierungsmittel, Flammschutzmittel, Bakterizide, Vernetzungsmittel, Hydrophobiermittel, Antistatika und/oder Farbmittel handeln. Darüber hinaus ist es vorteilhaft, wenn ein Alkohol, ein Gemisch von Alkoholen, ein Gemisch aus Alkohol(en) und Wasser im Koagulationsmedium enthalten ist, wobei die Menge so bemessen sein muss, dass das Erfindungsziel erreicht wird. Zu den Additiven ist noch auszuführen, sofern sie in Betracht kommen, dass sie vorzugsweise in dem Koagulationsmedium, dem Lösungssystem und/oder einem nachfolgenden Modifizierungsbad löslich und/oder fein dispergierbar sind. Dies führt dazu, dass die Verfahrenserzeugnisse in ihrer Homogenität nicht gestört werden.

Vorzugsweise wird das die Biopolymere enthaltende Lösungssystem vor der Verarbeitung auf eine Temperatur von mehr als etwa 0°C, insbesondere mehr als etwa 10°C und/oder das Kogulationsmedium auf eine Temperatur von mehr als etwa 20°C eingestellt. Hierbei ist es besonders zweckmäßig, das die Biopolymere enthaltende Lösungssystem vor der Verarbeitung zu erwärmen, insbesondere auf etwa 80 bis 120°C, oder das Koagulationsmedium insbesondere auf eine Temperatur von etwa 40 bis 90 °C einzustellen. Durch diese Maßnahme ergibt sich der Vorteil, dass eine bevorzugte Viskosität der Lösung eingestellt und das Lösungsmittel vorteilhaft ausgewaschen wird.

Erfindungsgemäß wird das die Biopolymere gelöst enthaltende Lösungssystem auf der Basis ionischer Flüssigkeit dann zur regenerierenden Verarbeitung herangezogen, wobei die Biopolymere in Form von Stärke, Cellulose und von Derivaten von Stärke und Cellulose besonders bevorzugt werden.

Das in der oben geschilderten Weise hergestellte Lösungssystem, das die zu regenerierenden Biopolymere enthält, wird dann in üblicher Weise in ein Koagulationsmedium überführt, in dem sich ein Koagulationsmittel oder ein Gemisch von Koagulationsmitteln befindet, das die Biopolymere nicht löst und mit der geschmolzenen ionischen Flüssigkeit mischbar ist. Das Koagulationsmittel ist vorab unter Zugrundelegung des erfindungsgemäßen Parameters zur Oberflächenspannung ausgewählt worden.

Bezüglich der Auswahl des Koagulationsmittels gilt allein die Beachtung des Auswahlparameters bezüglich der Oberflächenspannung. Bevorzugt handelt es sich hier um protische Lösungsmittel. Als besonders günstig haben sich folgende Koagulationsmittel erwiesen: Glycerin, Triethylenglykol, Diethylenglykol, Ethylenglykol, 1,6-Hexandiol, 1,4-Butandiol, 1,2-Propandiol und 1,3-Propandiol. In Frage kommen auch Mischungen dieser Koagulationsmittel, wobei auch Mischungen derselben mit Wasser einsetzbar sind, sofern dadurch die Erreichung des Erfindungsziels nicht beeinträchtigt wird. Wenngleich es für die Konzentration des Koagulationsmittels in dem Koagulationsmedium keine kritische Beschränkung gibt, ist es vorteilhaft, dass das Koagulationsmittel in dem Koagulationsmedium in einer Menge von 35 bis 100 Gew.-%, insbesondere 40 bis 90 Gew.-% eingesetzt wird. Auf die Möglichkeit der Einbeziehung anderer protischer Lösungsmittel und/oder von Additiven und dergleichen wurde vorstehend bereits eingegangen, worauf verwiesen sei.
Im weiteren Ablauf des erfindungsgemäßen Verfahrens wird dann das Lösungssystem, das das Biopolymer enthält, in üblicher Weise in dem Koagulationsmedium ausgefällt. In dem Koagulationsmedium stellt sich nun eine veränderte Situation dadurch ein, dass es nun die ursprünglichen Bestandteile des Koagulationsmediums neben den Bestandteilen des Lösungsmittels, insbesondere die ionische Flüssigkeit, enthält, jedoch das ursprünglich in dem Lösungssystem gelöste Biopolymer koaguliert wird.
In diesem Stadium des erfindungsgemäßen Verfahrens wird einerseits das regenerierte Biopolymer abgezogen, andererseits das angesprochene Gemisch, das die ionische Flüssigkeit und das Fällungsmittel enthält, einer weiteren Verarbeitung unterzogen, um die ionische Flüssigkeit rückzugewinnen. Die ionische Flüssigkeit kann relativ problemlos aus dem Koagulationsmedium wiedergewonnen werden, so durch Abdampfen, Strippen, Perforation oder Umkehrosmose eines flüchtigen Koagulationsmittels, wie beispielsweise in Form von 1,2-Propandiol. Darüber hinaus gibt es die Möglichkeit, die ionische Flüssigkeit auszukristallisieren und auf diese Weise von dem flüssigen Koagulationsmittel zu trennen. Dabei muss das Koagulationsmittel nicht vollständig entfernt werden. Eine vollständige Entfernung könnte aufwändig und unwirtschaftlich sein. Somit lässt es die Erfindung zu, dass ein gewisser Anteil an Koagulationsmittel zusammen mit der ionischen Flüssigkeit in den Kreislauf des erfindungsgemäßen Verfahrens rückgeführt bzw. wieder zum Auflösen der zu regenerierenden Biopolymeren herangezogen wird.

Aus dem oben angesprochenen Koagulationsmedium, das die ausgefällten Formlinge der Biopolymere enthält, lassen sich diese Formlinge, z.B. Fasern oder Folien, auf verschiedene Weise separieren. Dies kann beispielsweise durch Filtration, Zentrifugieren oder andere geeignete Maßnahmen erfolgen. In dem Falle, dass Fasern entstehen, werden diese in bekannter Weise aus dem Koagulationsmedium abgezogen.
In Einzelfällen ist es von Vorteil, wenn die aus dem Koagulationsmedium abgezogenen Fasern bzw. Filamente, insbesondere aus Cellulose, in einem nachfolgenden Verstreckungsbad oder auch in einem nachfolgenden Heizkanal verstreckt werden. Dabei erfolgt die Verstreckung vorzugsweise bis zu mindestens 10%, insbesondere bis zu mindestens 50%. Die Erfindung bietet die vorteilhafte Möglichkeit, die Fasern bzw. Filamente auf mindestens bis zu 70% zu verstrecken. Dabei beruht das Verstreckungsbad zweckmäßigerweise auf Lösungsmitteln, insbesondere in Form von Glycerin, Diethylenglykol, Ethylenglykol, 1,6-Hexandiol, 1,4-Butandiol, 1,2-Propandiol, 1,3-Propandiol und Triethylenglykol.
Die Erfindung ist demzufolge vielfältig ausgestaltet und wurde bezüglich dieser Ausgestaltung oben umfänglich dargestellt. Allerdings soll hier auch das nach der Regenerierung des Biopolymers anfallende Verfahrenserzeugnis geschützt werden, insbesondere in Form regenerierter Cellulosefasern.

Demzufolge sind Gegenstand der vorliegenden Erfindung auch Spinnfasern auf der Basis von regenerierter Cellulose mit einer Nassfibrillationsnote von weniger oder gleich 2, die insbesondere nicht-fibrillierend sind. Sie zeichnen sich insbesondere dadurch aus, dass das Verhältnis von Nassfestigkeit zu Trockenfestigkeit mindestens 0,55, insbesondere mindestens etwa 0,6 ist. Ganz besonders bevorzugt liegt dieser Wert bei mindestens etwa 0,7. Diese Spinnfasern sind darüber hinaus gekennzeichnet durch einen Gehalt an Schwefel von weniger als 1 mg/g, insbesondere weniger als 0,75 mg/g, und einen Kupfergehalt von weniger als 20 µg/g, insbesondere von weniger als 15 µg/g. Hierbei ist es bevorzugt, dass der Schwefelgehalt weniger als 0,5 mg/g, insbesondere weniger als 0,25 mg/g, und der Kupfergehalt weniger als 10 µg/g, insbesondere weniger als 5 µg/g, beträgt. Die Angaben zu den Spinnfasern gemäß der Erfindung zum Schwefel- und Kupfergehalt beziehen sich insbesondere auf die aus dem Koagulationsbad austretenden und nicht gewaschenen Spinnfasern.

Ein besonderer Vorteil der erfindungsgemäßen Spinnfasern besteht darin, dass sie herstellungsbedingt keine N-Oxide enthalten, wie beispielsweise im Stand der Technik bekannte Amin-Oxide, wie N-Dimethyl-N-diethyl-Amin oder andere Oxide von heterocyclischen Aminen, wie Pyridin-Oxide, insbesondere N-Methyl-morpholin-N-oxid-monohydrat (NMMO).
Schließlich ist noch darauf hinzuweisen, dass die erfindungsgemäßen Spinnfasern zur Einstellung der Eigenschaft des Nichtfibrillierens keine weitergehenden Maßnahmen benötigen. Insbesondere weisen sie keine Quervernetzung auf, die nachträglich mittels Vernetzungschemikalien ausgebildet wurde. Dem Fachmann ist es ohne Weiteres möglich festzustellen, ob eine solche Quervernetzung vorliegt. Dies kann beispielsweise anhand der IR-Spektroskopie vorgenommen werden.
Die erfindungsgemäßen Spinnfasern zeigen eine besonders vorteilhafte Höchstzugkraft, d.h. Nass- oder Trockenhöchstzugkraft, und Bruchdehnung. Die Höchstzugkraft nach DIN EN ISO 2062 beträgt mindestens 6 cN/tex, insbesondere mindestens 10 cN/tex. Die Bruchdehnung nach DIN EN ISO 2062 beträgt vorzugsweise mindestens 4 %, insbesondere mindestens 6 %.

Die erfindungsgemäßen Spinnfasern, die durch Nass-in-Nassverspinnen erhalten werden, zeichnen sich, wie bereits ausgeführt, dadurch aus, dass sie "nicht-fibrillierend" sind. Dies bedarf der weitergehenden Erläuterung: Die nach dem NMMO-Verfahren hergestellten Lyocellfasern besitzen einen runden bis ovalen Faserquerschnitt und weisen im Gegensatz zu den Viskose- und Modalfasern eine ausgeprägte fibrillare Struktur auf, die weitgehend homogen über den Faserquerschnitt ist. Es liegen Makrofibrillen mit einem Durchmesser im Bereich 0,5 bis 1,0 µm vor, die relevant für die auffällige und in der Technik meist störende Nassfibrillation und das Pilling sind. Eine Einstufung der Fibrillation kann anhand eines nachfolgend beschriebenen Fibrilliertests durchgeführt werden:
Bewertung der Fibrillationsnote: Zur Prüfung werden 8 Filamente mit einer Länge von 2,5 ± 0,2 mm herangezogen und diese mit Hilfe eines Klebebandes auf einem U-förmigen Rahmen aus Polystyrol angeklebt. Nach Aufbringen der 8 Filamente auf dem Rähmchen werden diese mit handelsüblichem Epoxidharzkleber fixiert. Der Rahmen wird mit 4 ml destilliertem Wasser in ein zylindrisches 20 ml-Glasgefäß von 50 mm Höhe und 25 mm Durchmesser gelegt und anschließend 100 Kugeln aus Zirkoniumdioxid (Durchmesser: 1 mm) hinzugefügt. Die Probenbehälter werden in die Behandlungsbecher eines Apparates gegeben, der es erlaubt eine geeignete Schüttelbewegung zur Auslösung der Fibrillation durchzuführen. Vorzugsweise kann hierfür ein Färbeapparat eingesetzt werden, wie z.B. der Labomat der Fa. Mathis GmbH.

Die Behandlungsdauer im Apparat beträgt 3 Stunden bei einer Umdrehungszahl des Behälters von 50 U/min und einer Temperatur von 30°C.

Anschließend erfolgt eine mikroskopische Auswertung der von der eigentlichen Faser abstehenden Fibrillen, wobei der Rahmen auf einen Objektträger überführt wird und die Filamente mittels eines Skalpells vom Rahmen abgetrennt werden, so dass sie sich in paralleler Anordnung auf dem Objektträger befinden. Die Filamente werden in demineralisiertem Wasser eingebettet und mit einem Deckglas versehen. Die Auswertung erfolgt im Phasenkontrast durch Zählung der Einzelfibrillen. Die Beurteilung der Fibrillationsnote erfolgt nach folgendem Schema: 0 bis 5 gezählte Fibrillen = Note 1; 6 bis 10 gezählte Fibrillen = Note 2; 11 bis 20 gezählte Fibrillen = Note 3; 21 bis 40 gezählte Fibrillen = Note 4; 41 bis 80 gezählte Fibrillen = Note 5; > 80 gezählte Fibrillen = Note 6.

Gemäß den von K. Bredereck und F. Hermanutz in Rev. Prog. Color. 35 (2005), 59 zitierten Nassfibrillationsnoten weisen nach dem NMMO-Verfahren hergestellte Cellulosefasern eine Note von 4 oder 5 auf, während Normalviskose und Modal eine Note von 1 aufweisen und damit als nichtfibrillierend einzustufen sind. Die starke Nassfibrillation der aus NMMO gewonnenen Faser stellt einen gravierenden Nachteil in Textilveredlungsprozessen dar, wie z.B. in der Färbung, und erzwingt veränderte Arbeitsprozesse und maschinentechnische Zusatzmaßnahmen in der Verarbeitung. Die Herstellung fibrillationsfreier Cellulosefasern, die nach dem NMMO-Verfahren erhalten werden, ist aufgrund der Besonderheiten des Spinnprozesses (Spinnen über einen Luftspalt) nicht möglich, sondern nur durch eine spezielle Fasernachbehandlung zu erreichen. Zur Vermeidung der Fibrillierneigung von aus NMMO-Lösung gesponnenen sogenannten Lyocellfasern werden in der Fasernachbehandlung nach dem Stand der Technik reaktive, die Celluloseketten vernetzende Substanzen zugefügt. Eine Reduzierung der Fibrillation lässt sich demnach durch chemische Vernetzung bei der Nachbehandlung niemals getrockneter Fasern erreichen und hat zu den modifizierten Lyocellfasertypen Lenzing Lyocell LF (C. Rohrer, P. Retzel and H. Firgo in Man-made Fiber Yearbook (Chem. Fibers Intern.) 2001, 8 (2001) 26 und Tencel A100 (P. Alwin and J. Taylor in Melliand Textilber., 82 (2001) 196) geführt. Durch Einführung der Vernetzungsbrücken kommt es beim ersten Trocknen zu einer deutlich geringeren irreversiblen Verhornung wie bei den Standard-Lyocellfasern. Probleme bei diesen fibrillationsarmen direktgesponnenen Cellulosefasern bereitet indessen die Tatsache, dass die zur Vernetzung eingesetzten Substanzen einige der in Folgeprozessen herrschenden Bedingungen nur eingeschränkt überstehen. So ist es zum Beispiel im Falle des als Vernetzer eingesetzten Dichlorchlormonohydroxytriazins bekannt, dass fast die Hälfte des Vernetzers im Zuge einer technisch üblichen Wasserstoffperoxidbleiche abgespalten wird, so dass wieder eine verstärkte Fibrillierung der Faser erhalten wird. Von großem Vorteil wäre es demnach, wenn der Industrie direktgesponnene, nichtfibrillierende Cellulosefasern zur Verfügung gestellt werden könnten.

Mit der Erfindung ist es nun möglich, Cellulose, die in Form von Zellstoff, Baumwolllinters etc. vorliegt, mittels einer geeigneten Löseroutine - und ohne vorhergehende Derivatisierung - in einem dafür geeigneten Lösemittel zu lösen und verspinnbare Lösungen zu erhalten, die zu den Spinnfasern gemäß der Erfindung führen und die nach oben beschriebener Testmethode und Bewertungsskala eine Nassfibrillationsnote von gleich oder weniger als 2 aufweisen.

Im Rahmen der Erfindung ist es vorteilhaft, dass bei der Herstellung von Spinnfasern der Zusatz schwefelhaltiger Chemikalien des Viskoseverfahrens oder von Metallen, wie Kupfer oder Lithium oder deren Salzen, vermieden werden kann.

Die mit dem erfindungsgemäßen komplexen Vorschlag zur Lösung der gestellten Aufgabe verbundenen Vorteile sind vielschichtig:

Das erfindungsgemäße Lösungssystem auf der Basis einer ionischen Flüssigkeit ist besonders gut geeignet, die bezeichneten Biopolymere, insbesondere Cellulose und Stärke bzw. deren Derivate, im Rahmen einer Thermostatisierung bei einer geeigneten Lösetemperatur zu lösen, bis der Lösevorgang weitestgehend abgeschlossen ist. Bei einer bevorzugten Weiterverarbeitung wird diese Lösung filtriert und das Vakuum entgast und auf einer Spinnanlage durch Spinndüsen in ein Koagulationsmedium extrudiert. Dieses enthält die abgestimmten Koagulationsmittel, wobei es sich auch um protische Lösungsmittel handeln kann, wie oben dargestellt. Zur Produktkonsolidierung wird ionische Flüssigkeit aus dem regenerierte Biopolymere enthaltenden Koagulationsmedium vollständig ausgewaschen und das Produkt, beispielsweise eine Cellulosefaser, getrocknet. Zur Rückgewinnung für einen erneuten Einsatz wird das Koagulationsmittel von der ionischen Flüssigkeit bis zu einem bevorzugten Gehalt entfernt. Dieser Gehalt kann beispielsweise zwischen etwa 6 und 15 Gew.-% liegen. Danach wird das Lösungssystem erneut zum Auflösen von Biopolymeren eingesetzt. Diese beispielhafte Ausführungsform zeigt, dass eine verbesserte Verarbeitung, wie eine flexible Einstellung von Produkteigenschaften und eine besonders wirtschaftliche Verfahrensdurchführung, möglich werden.

Im Hinblick auf die erfindungsgemäß erhaltenen Spinnfasern sei noch auf folgende weitere Vorteile hingewiesen, die sich aus der besonderen Verfahrensweise gemäß der Erfindung ergeben: Es lassen sich hervorragende Lösungsmittel für Cellulose einsetzen, insbesondere in Form von 1-Ethyl-3- methylimidazolium-acetat (EMIM-OAc). EMIM-OAc führt zu folgenden Vorteilen: Es handelt sich um eine Flüssigkeit bei Raumtemperatur. Sie führt zu stabilen Spinnlösungen. Mit EMIM-OAc kann Cellulose problemlos bis zu 25 Gew.-% gelöst werden. Die Herstellung, Filtration und das Entgasen der Spinnlösung ist technisch einfach. Gelteilchen werden weitestgehend ausgeschlossen. Es ist keine bemerkenswerte Empfindlichkeit gegenüber Luft feststellbar. Die Spinnlösungen haben hervorragende Hitzestabilität. Die Zugabe von Stabilisatoren ist nicht erforderlich. Die Spinnlösungsviskosität kann in einem weiten Bereich (10 bis 10.000 Pas) eingestellt werden, was eine hohe Flexibilität im Spinnverfahren bedeutet. Somit schafft die Erfindung ein sehr interessantes Verfahren zur umweltfreundlichen Produktion von "man made" Cellulosematerialien. Verbunden ist hiermit eine hohe Produktionsflexibilität mit einem breiten Bereich mechanischer Eigenschaften. Es treten keinerlei Probleme bei anschließenden Verfahren auf, wie dem Garnverspinnen, Stricken bzw. Wirken, Färben und bei Maßnahmen, die zur Verbesserung der Gebrauchs- und Fabrikationsechtheiten, insbesondere der Farbechtheit.

Es erscheint sachdienlich, die besonderen Vorteile, die mit der vorliegenden Erfindung verbunden sind, unter technologischen Gesichtspunkten, kurz darzustellen: Bei der Koagulation des Fadens bzw. der Faser (Nass-in-Nass-Technik ohne Luftspalt) in Wasser tritt eine sehr schnelle Ausfällung ein, wodurch die Struktur fixiert wird. Es stellt demzufolge gebundenes Wasser dar. Diese Fixierung der Polymerketten läuft in Wasser aufgrund der hohen Wasserstoffbrückenbindungsdichte sehr schnell ab. Wasser wird quasi in die Struktur mit eingebunden. Man spricht auch von gebundenem Wasser. Dadurch kann die Orientierung der Celluloseketten in Richtung der Faserachse unzureichend sein, weil Fehlstände und Poren auftreten können, also keine Fibrillenstruktur, wie sie bei Lyocellfasern (hohe Polymerorientierung bei Verarbeitung von hochkonzentrierten Lösungen im Luftspalt) zu finden ist. Die erhaltenen Cellulosefasern sind zwar nicht-fibrillierend (eben gerade aufgrund der fehlenden Fibrillenstruktur), haben aber unzureichende Festigkeit. Die Nassfestigkeit fällt gegenüber der Trockenfestigkeit merklich ab. Durch die Verwirklichung der vorliegenden Erfindung, bei der ein abgestimmtes Koagulationsmedium, beispielsweise unter Einsatz von Glycerin und/oder 1,2-Propandiol, eingesetzt wird, ist es gelungen, die Koagulationsgeschwindigkeit beim Nass-in-Nass-Spinnen so zu verlangsamen, dass die Nassfestigkeiten und Trockenfestigkeiten wesentlich verbessert werden konnten, ohne die Fibrillationsneigung zu verstärken. Die verbesserte Orientierung der Polymerketten wird durch nun mögliche höhere Spinnverzüge im Koagulationsbad und höhere Verstreckung der Fasern im nachgeschalteten Verstreckungsbad (bis zu 100%, in Wasser nur 10%-ige Verstreckung) möglich. Im Rahmen der Erfindung werden demzufolge die Diffusions- und Koagulationsabläufe verzögert, was bei gleichzeitiger Einwirkung von Zugspannungen auf die Fasern höhere Polymerorientierungen ermöglicht und damit zu höheren Festigkeiten führt. Diese höhere Flexibilität in den Verfahrensparametern spiegelt sich also direkt in verbesserten Fasereigenschaften wieder. Die Flexibilität des erfindungsgemäßen Verfahrens geht so weit, dass an Stelle eines Verstreckungsbades erstmals bei einem Verspinnverfahren ein Heizkanal eingesetzt werden kann, in dem die Fasern bzw. Filamente kontaktlos verstreckt werden.

Anhand der oben beschriebenen Parameter, die in ihrer Gesamtheit oder bevorzugt die erfindungsgemäße Lehre ausmachen, ist es dem Fachmann problemlos möglich, geeignete Einrichtungen des Standes der Technik einzusetzen, um das Erfindungsziel zu erreichen. In diesem Zusammenhang sei beispielsweise verwiesen auf die Literatur B. Falkai, "Synthesefasern - Grundlagen, Technologie, Verarbeitung und Anwendung", Verlag Chemie, Weinheim 1981, S. 87 bis 137). Dennoch soll hier beispielhaft dargestellt werden, welche Einrichtung für die Durchführung des erfindungsgemäßen Verfahrens geeignet ist:

Bei Spinnprozessen, hier dem Nass-in-Nass-Spinnprozess (ohne Luftspalt), wird die Lösung einer hochpolymeren Verbindung in Form eines Biopolymers, insbesondere Cellulose, mit einer Spinnpumpe durch Rohrleitungen zum formgebenden Element gefördert. Das formgebende Element ist im Falle der Herstellung von Fasern eine Düsenkapillare, im Falle der Herstellung von Folien eine Schlitzdüse oder Walze. Im zweiten Schritt wird die Spinnlösung durch die Düsenlöcher bzw. den Schlitz gedrückt und durch den Abzug verjüngt, zum Teil auch schon orientiert. Bei dem Nassverspinnen im Rahmen der Erfindung erfolgt durch einen diffusionskontrollierten Lösungsmittelaustauschprozess die Koagulation des in der Spinnlösung gelösten Biopolymeren zu z.B. Fasern bzw. Folien. Die erstarrten Fasern werden z.B. von rotierenden Organen (Galetten) erfasst und von der Düse abgezogen. Die Spritzgeschwindigkeit der Spinnlösung wird durch das Verhältnis des in der Zeiteinheit ausfließenden Volumens des Spinngutes zum lichten Querschnitt der Spinndüse, d.h. zur Gesamtfläche aller Öffnungen, bestimmt. Die Faserbildung erfolgt hier direkt nach Austritt aus der Düse durch Diffusions- und Koagulationsprozesse. Für eine ausreichende Koagulation muss eine hinlängliche Kontaktzeit der Fäden hergestellt sein, die durch die sogenannte Fälllänge bestimmt wird. Die Fälllänge bedeutet die Zeitspanne, an deren Ende die Koagulation abgeschlossen ist. Diese Fälllänge richtet sich somit nach dem Zeitbedarf der stofflichen Diffusionsvorgänge und nach dem Verhältnis von Abzugs- und Spritzgeschwindigkeit. Die Abzugsgeschwindigkeit richtet sich nach dem gewünschten Fasertiter, der Fördermenge, nach dem Spinngut und nach der Zusammensetzung des Koagulationsbades.

Eine vorteilhafte Weiterbildung der Erfindung besteht, wie gezeigt, darin, die Formkörper, die erfindungsgemäß aus dem Koagulationsmedium abgezogen werden, insbesondere die Fasern, in einem nachfolgenden Vorgang einer Verstreckung zu unterziehen. Die Verstreckung kann beispielsweise in einem Verstreckungsbad erfolgen. Um den Verstreckungsprozess zu begünstigen, ist es vorteilhaft, wenn das für das Biopolymer verwendete Lösungsmittel im Koagulationsmedium nicht restlos entfernt wird, so dass eine weitergehende Verstreckung und nochmalige Steigerung der Polymerorientierung in dem nachfolgenden Verstreckungsbad ermöglicht wird. An Stelle des Verstreckungsbades kann ein Heizkanal herangezogen werden. Der Heizkanal kann z.B. ein längliches Rohr darstellen, durch den die zu verstreckende Faser bzw. Folie geführt wird, wobei die darin enthaltene Atmosphäre auf eine erhöhter Temperatur eingestellt ist. In Abhängigkeit von dem jeweiligen Material wird die optimale Verstreckungstemperatur im Heizkanal eingestellt. In der Mehrzahl der Fälle liegt diese Temperatur zwischen etwa 120°C und 180°C.

Zwischen den Maßnahmen der Koagulation und der Verstreckung kann gewaschen werden. Nach dem Verstrecken wird regelmäßig gewaschen. Der Waschprozess erfolgt nach technisch etablierten Methoden, wie z.B. in Waschtrögen mit rotierenden Walzen, Haspeln oder gelochten Transportbändern, auf die Wasser oder andere geeignete Waschflüssigkeiten gesprüht werden.

Die Erfindung soll nachfolgend anhand verschiedener Beispiele noch näher erläutert werden. Wenn in den Beispielen von "Gewichtsprozent" gesprochen wird, dann soll sich dieses auf das Gesamtgewicht der Endlösung beziehen.

### Beispiel 1: Herstellung einer Celluloselösung in 1-Ethyl-3-methylimidazoliumacetat (EMIM-OAc) im Labormixer

Zu 900 g 1-Ethyl-3-methylimidazoliumacetat (EMIM-OAc) werden im Labormixer vorgelegt, auf 90°C (Lösetemperatur) im Umluftofen thermostatisiert und 100 g Cellulose (BW-Linters DP600) zugeben. Es wird 1 min auf Stufe 2 gemixt und für 45 min bei 90°C im Umluftofen gelagert. Danach wird erneut auf Stufe 2 gemixt und weitere 45 min auf 90°C temperiert.

Die Celluloselösung wird in einer Drucknutsche (15 µm Filtergewebe) filtriert. Die Lösung wird bei Raumtemperatur gelagert.

### Beispiel 2: Faserherstellung in Glycerin (Oberflächenspannung σ gemäß Erfindungsdefinition: 90,5%)

Lösung aus Beispiel 1 wurde mit einer konventionellen Nassspinnanlage verarbeitet. Die Spinnanlage ist aus folgenden Modulen aufgebaut: Lösungsbehälter, Spinnpumpe, Filter, Spinndüse, Koagulationsbad, Verstreckbad, Waschbad, Trockengaletten, Wickler. Die wesentlichen Verfahrensparameter zeigt nachfolgende Tabelle:

| Düse | 100 Loch/ 60µm |
|---|---|
| Spinntemperatur | 80 °C |
| Koagulationsmedium | Glycerin(80°C) |
| Verstreckbad | Glycerin(80°C) |
| Waschmedium | Wasser (60°C) |

Nach Variation der Verfahrensparameter Spinnverzug und Verstreckgrad ergaben sich folgende Fasereigenschaften:

| | | | | |
|---|---|---|---|---|
| Verstreckgrad | 30% | 30% | 70% | 70% |
| Spinnverzug | -50% | 0 | -50% | 0 |
| Feinheit [dtex] (Einzelfilament) | 1,75 | 1,75 | 1,25 | 1,25 |
| Höchstzugkraft (trocken) [cN/tex] | 17,5 | 18,4 | 19,8 | 25,4 |
| Trockenbruchdehnung [%] | 9 | 8 | 8 | 7 |
| Höchstzugkraft (nass) [cN/tex] | 16,8 | 17,4 | 18,2 | 24,3 |
| Nassbruchdehnung [%] | 10 | 9 | 8 | 8 |

### Beispiel 3: Faserherstellung in 1,4-Butandiol (Oberflächenspannung σ gemäß Erfindungsdefinition: 61,4%)

Die Celluloselösung aus Beispiel 1 wurde nach Beispiel 2 verarbeitet. Anstatt Glycerin wurde 1,4-Butandiol eingesetzt. Nach Variation der Verfahrensparameter Spinnverzug und Verstreckgrad ergaben sich folgende Fasereigenschaften:

| | | | | |
|---|---|---|---|---|
| Verstreckgrad | 30% | 30% | 70% | 70% |
| Spinnverzug | -50% | 0 | -50% | 0 |
| Feinheit [dtex] (Einzelfilament) | 1,8 | 1,8 | 1,3 | 1,35 |
| Höchstzugkraft (trocken) [cN/tex] | 18,2 | 19,3 | 21,9 | 24,6 |
| Trockenbruchdehnung [%] | 10 | 8 | 7 | 6,5 |
| Höchstzugkraft (nass) [cN/tex] | 18,1 | 18,2 | 19,5 | 23,2 |
| Nassbruchdehnung [%] | 11,5 | 10 | 8 | 8,5 |

### Beispiel 4: Faserherstellung in 1,2-Propandiol (Oberflächenspannung σ gemäß Erfindungsdefinition: 48,7%)

Die Celluloselösung aus Beispiel 1 wurde nach Beispiel 2 verarbeitet. Anstatt Glycerin wurde 1,2-Propandiol eingesetzt. Nach Variation der Verfahrensparameter Spinnverzug und Verstreckgrad ergaben sich folgende Fasereigenschaften:

| | | | | |
|---|---|---|---|---|
| Verstreckgrad | 30% | 30% | 70% | 70% |
| Spinnverzug | -50% | 0 | -50% | 0 |
| Feinheit [dtex] (Einzelfilament) | 2,1 | 2,0 | 1,45 | 1,5 |
| Höchstzugkraft (trocken) [cN/tex] | 16,3 | 18,2 | 18,9 | 23,6 |
| Trockenbruchdehnung [%] | 11 | 9 | 7,5 | 5,5 |
| Höchstzugkraft (nass) [cN/tex] | 15,1 | 17,6 | 18,4 | 22,0 |
| Nassbruchdehnung [%] | 12,5 | 10 | 8 | 7,5 |

### Beispiel 5: Faserherstellung in Gemisch aus 50 Gew.-% Glycerin und 50 % Gew.-% 1,2-Propandiol.

Die Celluloselösung aus Beispiel 1 wurde nach Beispiel 2 verarbeitet. Als Koagulationsmedium und Verstreckungsbadlösung wurde ein Gemisch aus 50 Gew.-% Glycerin und 50 Gew.-% 1,2-Propandiol eingesetzt. Nach Variation der Verfahrensparameter Spinnverzug und Verstreckgrad ergaben sich folgende Fasereigenschaften:

| | | |
|---|---|---|
| Verstreckgrad | 70% | 70% |
| Spinnverzug | -50% | 0 |
| Feinheit [dtex] (Einzelfilament) | 1,65 | 1,7 |
| Höchstzugkraft (trocken) [cN/tex] | 20,6 | 21,5 |
| Trockenbruchdehnung [%] | 6 | 4,5 |
| Höchstzugkraft (nass) [cN/tex] | 19,3 | 20,8 |
| Nassbruchdehnung [%] | 7 | 5 |

### Beispiel 6: Faserherstellung in Gemisch aus 20 Gew.-% Ethyl-3-methylimidazolium-acetat und 80 Gew.-% 1,2-Propandiol.

Die Celluloselösung aus Beispiel 1 wurde nach Beispiel 2 verarbeitet. Als Koagulationsmedium und Verstreckungsbadlösung wurde ein Gemisch aus 20 Gew.-% 1-Ethyl-3-methylimidazoliumacetat und 80 Gew.-% 1,2-Propandiol eingesetzt. Nach Variation der Verfahrensparameter Spinnverzug und Verstreckgrad ergaben sich folgende Fasereigenschaften:

| | | |
|---|---|---|
| Verstreckgrad | 70% | 70% |
| Spinnverzug | -50% | 0 |
| Feinheit [dtex] (Einzelfilament) | 2,1 | 2,3 |
| Höchstzugkraft (trocken) [cN/tex] | 17,3 | 18,4 |
| Trockenbruchdehnung [%] | 8 | 7,5 |
| Höchstzugkraft (nass) [cN/tex] | 17,2 | 17,9 |
| Nassbruchdehnung [%] | 9 | 9,5 |

### Beispiel 7: Faserherstellung in Glycerin mit Verstreckung im Heizkanal

Lösung aus Beispiel 1 wurde mit einer konventionellen Nassspinnanlage verarbeitet. Die Spinnanlage ist aus folgenden Modulen aufgebaut: Lösungsbehälter, Spinnpumpe, Filter, Spinndüse, Koagulationsbad, Heizkanal (200 cm), Waschbad, Trockengaletten, Wickler. Die wesentlichen Verfahrensparameter zeigt nachfolgende Tabelle:

| Düse | 100 Loch/ 60 µm |
|---|---|
| Spinntemperatur | 80 °C |
| Koagulationsmedium | Glycerin (80°C) |
| Heizkanal | (120°C) |
| Waschmedium | Wasser (60°C) |

Nach Variation der Verfahrensparameter Spinnverzug und Verstreckgrad ergaben sich folgende Fasereigenschaften:

| | | | | |
|---|---|---|---|---|
| Verstreckgrad | 20% | 20% | 100% | 100% |
| Spinnverzug | -50% | 0 | -50% | 0 |
| Feinheit [dtex] (Einzelfilament) | 2,7 | 2,85 | 1,55 | 1,6 |
| Höchstzugkraft (trocken) [cN/tex] | 14,3 | 15,2 | 21,9 | 23,8 |
| Trockenbruchdehnung [%] | 10,5 | 9,5 | 4,5 | 4 |
| Höchstzugkraft (nass) [cN/tex] | 13,8 | 14,9 | 21,8 | 23,4 |
| Nassbruchdehnung [%] | 14 | 11 | 5 | 4,5 |

### Beispiel 8: Herstellung einer Celluloselösung in 1-Ethyl-3-methylimidazoliumchlorid (EMIM-Cl) im Rührgefäß

In einem doppelwandigem, thermostatisierbaren Reaktionsgefäß mit Flügelrührer, Rührmotor und Rückflusskühler werden 900 g 1-Ethyl-3-methylimidazoliumchlorid auf 80°C erwärmt und 100 g Cellulose (BW-Linters DP599) während 15 min unter Rühren zugegeben. Danach wird 2 h bei 80°C gerührt. Die Celluloselösung wird in einer Drucknutsche (15 µm Filtergewebe) filtriert. Die Lösung wird bei Raumtemperatur gelagert.

### Beispiel 9: Faserherstellung in Glycerin mit Versteckung im Heizkanal

Die Celluloselösung aus Beispiel 8 wurde nach Beispiel 7 verarbeitet. Als Koagulationsmedium wurde Glycerin eingesetzt. Nach Variation der Verfahrensparameter Spinnverzug und Verstreckgrad ergaben sich folgende Fasereigenschaften:

| | | |
|---|---|---|
| Verstreckgrad | 20% | 100% |
| Spinnverzug | 0 | 0 |
| Feinheit [dtex] (Einzelfilament) | 2,6 | 1,4 |
| Höchstzugkraft (trocken) [cN/tex] | 17,6 | 22,8 |
| Trockenbruchdehnung [%] | 8 | 6 |
| Höchstzugkraft (nass) [cN/tex] | 16,8 | 22,4 |
| Nassbruchdehnung [%] | 9 | 6 |

### Beispiel 10: Herstellung einer Celluloselösung in 1,3-Diethyl-imidazoliumacetat (DEIM-OAc) im Rührgefäß

In einem doppelwandigem, thermostatisierbaren Reaktionsgefäß mit Flügelrührer, Rührmotor und Rückflusskühler werden 900 g 1,3-Diethyl-imidazoliumacetat auf 80°C erwärmt und 100 g Cellulose (BW-Linters DP599) während 15 min unter Rühren zugegeben. Danach wird 2 h bei 80°C gerührt. Die Celluloselösung wird in einer Drucknutsche (15 µm Filtergewebe) filtriert. Die Lösung wird bei Raumtemperatur gelagert.

### Beispiel 11: Faserherstellung in Glycerin mit Versteckung im Heizkanal

Die Celluloselösung aus Beispiel 10 wurde nach Beispiel 7 verarbeitet. Als Koagulationsmedium wurde Glycerin eingesetzt. Nach Variation der Verfahrensparameter Spinnverzug und Verstreckgrad ergaben sich folgende Fasereigenschaften:

| | | |
|---|---|---|
| Verstreckgrad | 20% | 100% |
| Spinnverzug | 0 | 0 |
| Feinheit [dtex] (Einzelfilament) | 2,8 | 1,65 |
| Höchstzugkraft (trocken) [cN/tex] | 18,6 | 21,2 |
| Trockenbruchdehnung [%] | 9 | 7 |
| Höchstzugkraft (nass) [cN/tex] | 18,2 | 20,8 |
| Nassbruchdehnung [%] | 10 | 9 |

## Patentansprüche

1. Verfahren zur Herstellung von regenerierten Biopolymeren in Form von Kohlenhydraten, insbesondere von Stärke, Cellulose und/oder von Derivaten von Stärke und Cellulose, unter Verwendung eines die Biopolymere gelöst enthaltenden Lösungssystems, wobei das Lösungssystem auf einer geschmolzenen ionischen Flüssigkeit und gegebenenfalls einem protischen Lösungsmittel oder einem Gemisch hiervon beruht, die in dem Lösungssystem gelösten Biopolymere in einem Koagulationsmedium ausgefällt werden, wobei sich in dem Koagulationsmedium ein Koagulationsmittel oder ein Gemisch von Koagulationsmitteln befindet, **dadurch gekennzeichnet, dass** die Oberflächenspannung σ des Koagulationsmittels oder des Gemisches der Koagulationsmittel 99% bis 30% der Oberflächenspannung σ von Wasser beträgt, wobei die jeweilige Oberflächenspannung gemäß ASTM D 1590-60 bei einer Temperatur von 50°C gemessen wurde.

2. Verfahren nach Anspruch 1, **dadurch gekennzeichnet, dass** die Oberflächenspannung des Koagulationsmittels oder des Gemisches der Koagulationsmittel 99% bis 35%, insbesondere 99% bis 40% beträgt.

3. Verfahren nach Anspruch 1, **dadurch gekennzeichnet, dass** die ionische Flüssigkeit ein Kation mit Amidinium-Struktur enthält.

4. Verfahren nach Anspruch 3, **dadurch gekennzeichnet, dass** das Kation ein substituiertes oder unsubstituiertes Imidazolium-Kation ist.

5. Verfahren nach Anspruch 4, **dadurch gekennzeichnet, dass** das Imidazolium-Kation der ionischen Flüssigkeit in der 1- sowie 3-Stellung oder in der 1-, 2- sowie 3-Stellung mit (C₁-C₆)-Alkylgruppen substituiert ist.

6. Verfahren nach Anspruch 4 oder 5, **dadurch gekennzeichnet, dass** das Imidazolium-Kation das 1-Ethyl-3-methylimidazolium-, 1,3-Dimethylimidazolium-, 1-3-Diethylimidazolium- oder das 1-Butyl-3-methyl-imidazolium-Kation ist.

7. Verfahren nach mindestens einem der Ansprüche 1 bis 6, **dadurch gekennzeichnet, dass** das Anion der ionischen Flüssigkeit ein Halogenid-, Perchlorat-, Pseudohalogenid-, Sulfat-, Phosphat-, Alkylphosphat-, insbesondere ein C₁-C₆-Carboxylat-Ion ist.

8. Verfahren nach Anspruch 7, **dadurch gekennzeichnet, dass** das Halogenid-Ion als Chlorid-, Bromid- und/oder Iodid-Ion, das Pseudohalogenid-Ion als Cyanid-, Thiocyanat- und/oder Cyanat-Ion und das C₁-C₆-Carboxylat-Ion als Formiat-, Acetat-, Propionat-, Butyrat-, Hexanoat-, Maleat-, Fumarat-, Oxalat-, Lactat- und/oder Pyruvat-Ion vorliegt.

9. Verfahren nach mindestens einem der Ansprüche 1 bis 8, **dadurch gekennzeichnet, dass** die geschmolzene ionische Flüssigkeit einen Schmelzpunkt von -100 bis + 150°C, insbesondere von -30 bis +80°C aufweist.

10. Verfahren nach mindestens einem der Ansprüche 1 bis 9, **dadurch gekennzeichnet, dass** die ionische Flüssigkeit vorliegt als 1-Ethyl-3-methylimidazolium-acetat, 1,3-Dimethylimidazolium-acetat, 1-Ethyl-3-methylimidazolium-chlorid, 1-Butyl-3-methylimid-azolium-acetat, 1-Ethyl-3-methylimidazolium-diethylphosphat, 1-Methyl-3-methylimid-azolium-dimethylphosphat, 1-Ethyl-3-methylimidazolium-formiat, 1-Ethyl-3-methylimid-azolium-octanoat, 1,3-Diethylimidazolium-acetat, 1,3-Diethylimid-azoliumchlorid und/ oder 1-Ethyl-3-methylimidazoliumpropionat.

11. Verfahren nach mindestens einem der Ansprüche 1 bis 10, **dadurch gekennzeichnet, dass** als Derivate der Stärke und der Cellulose deren Ester oder Ether eingesetzt werden.

12. Verfahren nach mindestens einem der Ansprüche 1 bis 11, **dadurch gekennzeichnet, dass** die Stärke, Cellulose und/oder deren Derivate in dem Lösungssystem in einer Menge von mehr als etwa 1% Gew.-%, insbesondere mehr als etwa 5 Gew.-%, eingesetzt werden.

13. Verfahren nach Anspruch 12, **dadurch gekennzeichnet, dass** die Stärke, Cellulose und/oder deren Derivate in dem Lösungssystem in einer Menge von etwa 1 bis 35 Gew.-%, insbesondere in einer Menge von etwa 5 bis 20 Gew.-%, eingesetzt werden.

14. Verfahren nach mindestens einem der Ansprüche 1 bis 13, **dadurch gekennzeichnet, dass** das Lösungssystem eine Nullviskosität (gemessen mit einem Rotationsviskosimeter) zwischen etwa 5 und 150.000 Pa.s, insbesondere zwischen etwa 10 und 100.000 Pa.s aufweist.

15. Verfahren nach mindestens einem der Ansprüche 1 bis 14, **dadurch gekennzeichnet, dass** Cellulose bzw. deren Derivat in dem Lösungssystem gelöst ist, wobei die Cellulose bzw. deren Derivat einen durchschnittlichen Polymerisationsgrad von etwa 200 bis 3500, insbesondere von etwa 300 bis 1500, aufweisen.

16. Verfahren nach mindestens einem der Ansprüche 1 bis 15, **dadurch gekennzeichnet, dass** das die Biopolymere enthaltende Lösungssystem vor dem Einleiten in das Koagulationsmedium entgast wird.

17. Verfahren nach Anspruch 16, **dadurch gekennzeichnet, dass** das Entgasen des Lösungssystems unter Vakuum durchgeführt wird.

18. Verfahren nach mindestens einem der Ansprüche 1 bis 17, **dadurch gekennzeichnet, dass** das die Biopolymere enthaltende Lösungssystem in filtrierter Form eingesetzt wird, wobei die Filtration insbesondere unter Druckbeaufschlagung oder Vakuum durchgeführt wird.

19. Verfahren nach mindestens einem der Ansprüche 1 bis 18, **dadurch gekennzeichnet, dass** das Biopolymere gelöst enthaltende Lösungssystem nassversponnen wird.

20. Verfahren nach mindestens einem der Ansprüche 1 bis 19, **dadurch gekennzeichnet, dass** das die Biopolymere enthaltende Lösungssystem als Spinnlösung zur Herstellung nicht fibrillierender Fasern eingesetzt wird.

21. Verfahren nach Anspruch 19 oder 20, **dadurch gekennzeichnet, dass** das Spinnverfahren so ausgelegt wird, dass entweder Endlosfilamente oder Stapelfasern entstehen.

22. Verfahren nach mindestens einem der Ansprüche 1 bis 21, **dadurch gekennzeichnet, dass** das Cellulose enthaltende Lösungssystem eine hohe Viskosität aufweist, insbesondere eine Nullviskosität zwischen etwa 10 und 150.000 Pa.s, wobei der Gehalt an Cellulose insbesondere zwischen etwa 5 und 30 Gew.-% liegt.

23. Verfahren nach mindestens einem der Ansprüche 1 bis 22, **dadurch gekennzeichnet, dass** zur Einstellung spezieller Eigenschaften des gewonnenen ausgefällten Materials, insbesondere Fasermaterials, Additive hinzugefügt werden, wobei die Additive dem Koagulationsmedium, dem Lösungssystem und/oder einem nachfolgenden Modifizierungsbad zugefügt werden, insbesondere in Lösung oder feiner Dispergierung.

24. Verfahren nach Anspruch 23, **dadurch gekennzeichnet, dass** Additive in Form von Mikrokapseln, Porenbildnern, Weichmachern, Mattierungsmitteln, Flammschutzmitteln, Bakteriziden, Vernetzungsmitteln, Hydrophobiermitteln, Antistatika und/oder Farbmitteln zugegeben werden.

25. Verfahren nach mindestens einem der vorhergehenden Ansprüche, **dadurch gekennzeichnet, dass** als Koagulationsmittel im Koagulationsmedium Glycerin, Ethylenglykol, Diethylenglykol, Triethylenglykol, 1-4-Butandiol, 1,2-Propandiol, 1,3-Propandiol und/oder 1,6-Hexandiol und/oder Mischungen hiervon mit einem Gehalt an Wasser eingesetzt werden.

26. Verfahren nach mindestens einem der Ansprüche 1 bis 25, **dadurch gekennzeichnet, dass** das Koagulationsmittel in dem Koagulationsmedium in einer Menge von 30 bis 100 Gew.-%, insbesondere von 50 bis 100 Gew.-%, eingesetzt wird.

27. Verfahren nach mindestens einem der Ansprüche 1 bis 26, **dadurch gekennzeichnet, dass** das Biopolymere enthaltende Lösungssystem vor der Verarbeitung auf eine Temperatur von mehr als etwa 0 °C, insbesondere mehr als etwa 10 °C und/oder das Koagulationsmedium auf eine Temperatur von mehr als etwa 20 °C eingestellt wird.

28. Verfahren nach Anspruch 27, **dadurch gekennzeichnet, dass** das Biopolymere enthaltende Lösungssystem vor der Verarbeitung auf eine Temperatur von etwa 20 bis 140 °C, insbesondere etwa 80 bis 120 °C, und/oder das Koagulationsmedium auf eine Temperatur von etwa 40 bis 90 °C eingestellt wird.

29. Verfahren nach mindestens einem der Ansprüche 1 bis 28, **dadurch gekennzeichnet, dass** die im Koagulationsmedium ausgefällten Biopolymere in Form von Kohlenhydraten, insbesondere Stärke, Cellulose und/oder Derivate von Stärke und Cellulose, abgetrennt und die verbleibende flüssige Phase, gegebenenfalls nach teilweisem Eindampfen, zur Herstellung des ursprünglichen Lösungssystems zurückgewonnen und wieder zur Herstellung des die Biopolymere in Form von Kohlenhydraten enthaltenden Lösungssystems eingesetzt wird.

30. Verfahren nach mindestens einem der Ansprüche 1 bis 29, **dadurch gekennzeichnet, dass** die aus dem Koagulationsmedium abgezogenen Fasern bzw. Filmente in einem nachfolgenden Verstreckungsbad oder in einem nachfolgenden Heizkanal verstreckt werden.

31. Verfahren nach Anspruch 30, **dadurch gekennzeichnet, dass** die Fasern bzw. Filamente bis zu mindestens 10%, insbesondere bis zu mindestens 50% verstreckt werden.

32. Verfahren nach Anspruch 31, **dadurch gekennzeichnet, dass** die Fasern bzw. Filamente bis zu mindestens 70% verstreckt werden.

33. Verfahren nach mindestens einem der Ansprüche 30 bis 32, **dadurch gekennzeichnet, dass** das Verstreckungsbad auf einem Lösungsmittel beruht, das als Koagulationsmittel Bestandteil des Koagulationsmediums ist, insbesondere in Form von Glycerin, Ethylenglykol, Diethylenglykol, Triethylenglykol, 1-4-Butandiol, 1,2-Propandiol, 1,3-Propandiol und/oder 1,6-Hexandiol und/oder Mischungen hiervon mit einem Gehalt an Wasser.

34. Verfahren nach einem der Ansprüche 1 bis 33, **dadurch gekennzeichnet, dass** die aus dem Koagulationsmedium und/oder dem Verstreckungsbad abgezogenen Fasern bzw. Filamente gewaschen werden.

35. Verfahren nach mindestens einem der Ansprüche 30 bis 34, **dadurch gekennzeichnet, dass** die im Verstreckungsbad angesammelten ionischen Flüssigkeiten rückgewonnen werden.

36. Regenerierte Biopolymere in Form von Kohlenhydraten, erhältlich gemäß einem Verfahren nach mindestens einem der Ansprüche 1 bis 35, in Form von Fasern bzw. Filamenten oder Folien, insbesondere auf der Basis regenerierter Cellulose.

37. Spinnfasern auf Basis regenerierter Cellulose mit einer Nassfibrillationsnote von weniger oder gleich 2, die insbesondere nicht-fibrillierend sind, und mit einem Verhältnis von Nassfestigkeit zu Trockenfestigkeit von mindestens 0,55, insbesondere mindestens etwa 0,6.

38. Spinnfasern nach Anspruch 37, **dadurch gekennzeichnet, dass** das Verhältnis Nassfestigkeit zu Trockenfestigkeit mindestens etwa 0,7 beträgt.

39. Spinnfasern nach Anspruch 38, **gekennzeichnet durch** einen Gehalt an Schwefel von weniger als 1 mg/g, insbesondere weniger als 0,75 mg/g, und einen Kupfergehalt von weniger als 20 µg/g, insbesondere von weniger als 15 µg/g.

40. Spinnfasern nach Anspruch 39, **dadurch gekennzeichnet, dass** der Schwefelgehalt weniger als 0,5 mg/g, insbesondere weniger als 0,25 mg/g, und der Kupfergehalt weniger als 10 µg/g, insbesondere weniger als 5 µg/g, beträgt.

41. Spinnfasern nach Anspruch 39 oder 40, **dadurch gekennzeichnet, dass** sich die Angaben zum Schwefel- und Kupfergehalt auf die aus dem Koagulationsmedium austretenden, nicht gewaschenen Spinnfasern beziehen.

42. Spinnfasern nach mindestens einem der Ansprüche 37 bis 41, **dadurch gekennzeichnet, dass** sie herstellungsbedingt kein N-Methylmorpholin-N-oxid-Monohydrat (NMMO) enthalten.

43. Spinnfasern nach mindestens einem der Ansprüche 37 bis 42, **dadurch gekennzeichnet, dass** sie keine nachträglich mit Vernetzungschemikalien ausgebildete Quervernetzung aufweisen.
